# EUROPEAN PATENT APPLICATION

(11) **EP 4 636 536 A1**
(43) Date of publication of application: **22.10.2025**
(21) Application number: 23917904.7
(22) Date of filing: 18.12.2023
(51) Int. Cl.: G06F 1/16, G06F 3/16

(54) **FOLDABLE ELECTRONIC DEVICE AND ANGLE RECOGNITION METHOD USING SAME**

(30) Priority: 18.01.2023 KR 20230007598; 14.02.2023 KR 20230019263
(71) Applicant: Samsung Electronics Co., Ltd., Suwon-si, Gyeonggi-do 16677 (KR)
(72) Inventor: RHEE, Minsu, Suwon-si, Gyeonggi-do 16677 (KR); LIM, Gun, Suwon-si, Gyeonggi-do 16677 (KR)
(74) Representative: Gulde & Partner
(86) International application number: PCT/KR2023/020892
(87) International publication number: WO 2024/154952

(57) **Abstract**

According to various embodiments, a foldable electronic device may comprise: a first housing structure in which at least one audio output module is arranged; a second housing structure which is arranged to face the first housing structure, and in which at least one audio input module is arranged; a hinge module arranged between the first housing structure and the second housing structure; a memory; and a processor operatively connected to the at least one audio input module, the at least one audio output module and the memory. According to one embodiment, the processor can: output an audio signal on the basis of the at least one audio output module in response to the release of a folded state between the first housing structure and the second housing structure; acquire, on the basis of the at least one audio input module, the audio signal that was output; confirm the time difference value according to the output and acquisition of the audio signal; and confirm, on the basis of the confirmed time difference value, the angle implemented between the first housing structure and the second housing structure. Various other embodiments are possible.

## Description

### [Technical Field]

An embodiment of the disclosure relates to a foldable electronic device and an angle recognition method using the same.

### [Background Art]

With recent advances in technology, electronic devices have gradually evolved from standardized rectangular shapes to more diverse shapes. For example, an electronic device may have a transformable structure that provides convenient portability and allows the use of a large display. As an example of a transformable structure, the electronic device may be a foldable electronic device that includes a flexible display configured to operate in a manner in which at least two housings are foldable with respect to each other or unfoldable from each other. The electronic device may be a foldable electronic device including a plurality of housings (e.g., a first housing and a second housing), and may provide users with various user environments depending on the usage environment based on the plurality of housings.

The electronic device may include a foldable electronic device including a first housing, a hinge housing connected to one end of the first housing, and a second housing foldably connected to the first housing via the hinge housing. For example, the hinge housing may be disposed between the first housing and the second housing and may be structurally coupled to the first housing and the second housing. The electronic device may operate in one of a folded state, an intermediate state, and/or an unfolded state based on the hinge housing.

The above-described information may be provided as related art for the purpose of helping to understand the disclosure. No claim or determination is made as to whether any of the foregoing may be applied as prior art with respect to the disclosure.

### [Disclosure of Invention]

### [Technical Problem]

According to an embodiment, an electronic device may include a foldable electronic device. The electronic device may operate in one of a folded state in which one surface of a first housing and one surface of a second housing overlap each other in a face-to-face manner, an unfolded state in which the one surface of the first housing and the one surface of the second housing are unfolded to be oriented in substantially the same direction, and an intermediate state corresponding to a state other than the folded state and the unfolded state.

For example, the electronic device may identify the folded state and the unfolded state based on a Hall IC and a magnet, but may have difficulty in identifying an angle formed between the first housing and the second housing corresponding to the intermediate state. For example, if magnetic force generated from an external environment is induced into the electronic device, the electronic device may malfunction.

According to an embodiment, the electronic device (e.g., a foldable electronic device) may output an audio signal using a speaker (e.g., an audio output module) disposed in the first housing, and may acquire the output audio signal using a microphone (e.g., an audio input module) disposed in the second housing. The electronic device may identify an angle formed between the first housing and the second housing based on the acquired audio signal. The electronic device may identify an angle (e.g., an opening/closing angle) between the first housing and the second housing based on a time point at which the audio signal is acquired, and may provide additional functions to a user according to the identified angle.

According to an embodiment, in the folded state in which one surface of the first housing and one surface of the second housing are disposed to face each other, the electronic device may capture at least one image using a camera disposed on the surface. The electronic device may distinguish a first region corresponding to the electronic device and a second region corresponding to an external environment (e.g., background) based on the captured image. The electronic device may identify a ratio corresponding to the first region and a ratio corresponding to the second region based on the at least one image, and may identify the angle formed between the first housing and the second housing based on the identified ratios. By identifying an angle (e.g., an opening/closing angle) between the first housing and the second housing based on the at least one image captured using the camera, the electronic device may provide additional functions to the user according to the identified angle.

The technical problems to be addressed by the disclosure are not limited to those described above, and other technical problems may be clearly understood by a person ordinarily skilled in the related art to which the disclosure pertains.

### [Solution to Problem]

According to an embodiment, a foldable electronic device may include a first housing structure having at least one audio output module disposed therein, a second housing structure configured to be disposed to face the first housing structure in a folded state and having at least one audio input module disposed therein, a hinge module disposed between the first housing structure and the second housing structure, memory, and a processor operatively connected to the at least one audio input module, the at least one audio output module, and the memory. According to an embodiment, the processor may output an audio signal based on the at least one audio output module in response to a release of the folded state between the first housing structure and the second housing structure. The processor may acquire the output audio signal based on the at least one audio input module. The processor may identify a time difference value between the output and the acquisition of the audio signal. The processor may identify an angle formed between the first housing structure and the second housing structure based on the identified time difference value.

According to an embodiment, in a method of operating a foldable electronic device including a first housing structure having at least one audio output module disposed therein, a second housing structure configured to be disposed to face the first housing structure in a folded state and having at least one audio input module disposed therein, and a hinge module disposed between the first housing structure and the second housing structure, the method may include an operation of outputting an audio signal based on the at least one audio output module in response to a release of the folded state between the first housing structure and the second housing structure, an operation of acquiring the output audio signal based on the at least one audio input module, an operation of identifying a time difference value between the output and the acquisition of the audio signal, and an operation of identifying an angle formed between the first housing structure and the second housing structure based on the identified time difference value.

According to an embodiment, a non-transitory computer-readable storage medium (or computer program product) storing one or more programs may be described. According to an embodiment, when executed by a processor of a foldable electronic device including a first housing structure having at least one audio output module disposed therein, a second housing structure configured to be disposed to face the first housing structure in a folded state and having at least one audio input module disposed therein, and a hinge module disposed between the first housing structure and the second housing structure, the one or more programs may include instructions to: output an audio signal based on the at least one audio output module in response to a release of the folded state between the first housing structure and the second housing structure, acquire the output audio signal based on the at least one audio input module, identify a time difference value between the output and the acquisition of the audio signal, and identify an angle formed between the first housing structure and the second housing structure based on the identified time difference value.

### [Advantageous Effects of Invention]

According to an embodiment, an electronic device (e.g., a foldable electronic device including a first housing and a second housing) may acquire an audio signal based on an audio input module and an audio output module. The electronic device may acquire an image captured using a camera module. The electronic device may identify an angle formed between the first housing and the second housing based on a time difference value between the output and input of the audio signal and a ratio value corresponding to a display in the image. The electronic device may determine whether the folded state has been released based on the time difference value and the ratio value.

According to an embodiment, some components included in the inner space of the electronic device (e.g., a Hall IC, a magnet, or a magnetic member) may be omitted, and by securing a space from which such components are excluded, the design efficiency of the electronic device may be improved. According to an embodiment, the electronic device may precisely identify an angle formed between the first housing and the second housing and may change configurations (e.g., audio-related configurations or display-related configurations) according to the identified angle. Efficiency may be improved through the use of the electronic device.

The effects that are capable of being obtained by the disclosure are not limited to those described above, and other effects not described above may be clearly understood by a person ordinarily skilled in the art to which the disclosure belongs based on the following description.

### [Brief Description of Drawings]

In connection with the description of the drawings, the same or similar components may be denoted by the same or similar reference numerals.
FIG. 1 is a block diagram of an electronic device according to an embodiment of the disclosure in a network environment.
FIG. 2A is a view illustrating an electronic device according to various embodiments of the disclosure in an unfolded state.
FIG. 2B is a view illustrating the electronic device of FIG. 1 according to an embodiment of the disclosure in the folded state.
FIG. 3 is an exploded perspective view of the electronic device according to an embodiment of the disclosure.
FIG. 4A is a view illustrating a structure in which a protective frame is disposed on a display according to an embodiment of the disclosure.
FIG. 4B is a view illustrating an electronic device according to an embodiment of the disclosure in a folded state.
FIG. 5 is a block diagram of an electronic device according to an embodiment of the disclosure.
FIG. 6 is a flowchart illustrating a method of identifying an angle formed between a first housing and a second housing based on an audio signal according to an embodiment of the disclosure.
FIG. 7A is a view illustrating a first exemplary method of identifying an angle based on an audio signal according to an embodiment of the disclosure.
FIG. 7B is a view illustrating a second exemplary method of identifying an angle based on an audio signal according to an embodiment of the disclosure.
FIG. 7C is a view illustrating a third exemplary method of identifying an angle based on an audio signal according to an embodiment of the disclosure.
FIG. 8 is a flowchart illustrating a method of identifying an angle formed between a first housing and a second housing based on a captured image according to an embodiment of the disclosure.
FIG. 9A is a view illustrating an exemplary method of identifying an angle based on a captured image according to an embodiment of the disclosure.
FIG. 9B is a view illustrating an example of identifying an angle based on a length ratio of a display corresponding to one surface of a captured image according to an embodiment of the disclosure.
FIG. 9C is a view illustrating an example of identifying an angle based on an area ratio of a display within a total area of a captured image according to an embodiment of the disclosure.
FIG. 10A is a view illustrating a first exemplary method of identifying an angle based on a captured image according to an embodiment of the disclosure.
FIG. 10B is a view illustrating a second exemplary method of identifying an angle based on a captured image according to an embodiment of the disclosure.
FIG. 10C is a view illustrating a third exemplary method of identifying an angle based on a captured image according to an embodiment of the disclosure.
FIG. 11A is a view illustrating a first exemplary method of identifying an angle based on an image captured using a camera disposed at a different position, according to an embodiment of the disclosure.
FIG. 11B is a second exemplary view illustrating a method of identifying an angle based on an image captured using a camera disposed at a different position according to an embodiment of the disclosure.
FIG. 12 is a view illustrating an example of changing an audio-related configuration according to an angle formed between a first housing and a second housing according to an embodiment of the disclosure.
FIG. 13 is a view illustrating an example of changing a display-related configuration according to an angle formed between a first housing and a second housing according to an embodiment of the disclosure.

### [Mode for the Invention]

Hereinafter, embodiments of the disclosure will be described in detail with reference to the drawings such that a person ordinarily skilled in the art to which the disclosure belongs can easily carry out the disclosure. However, the disclosure may be implemented in many different forms, and is not limited to the embodiments described herein. In connection with a description made with reference to the drawings, the same or similar reference numerals may be used for the same or similar elements. In addition, in the drawings and related descriptions, descriptions of well-known functions and configurations may be omitted for clarity and brevity.

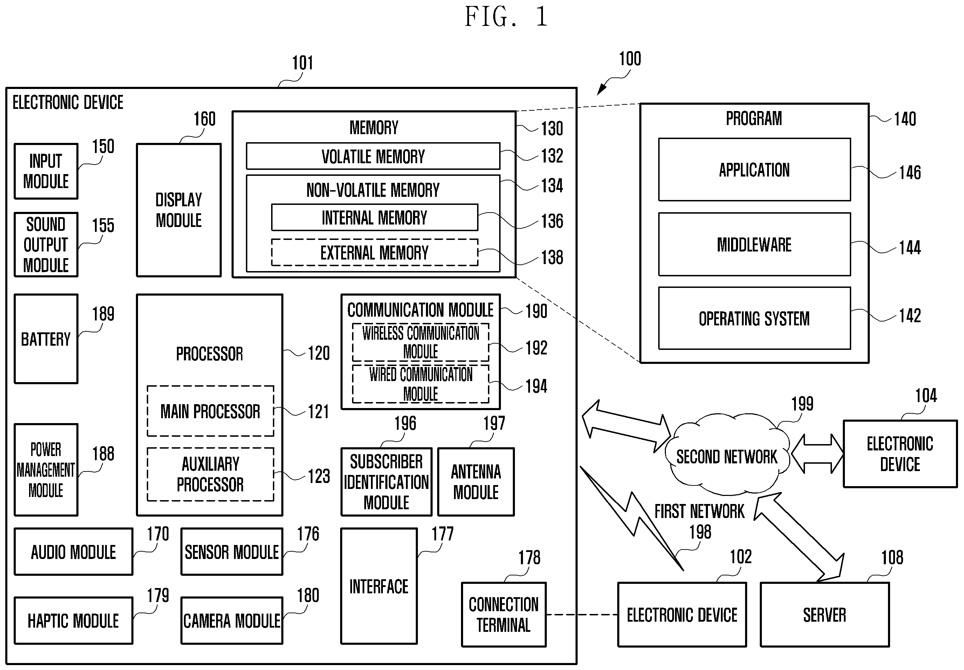

Fig. 1 is a block diagram illustrating an example electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102)(e.g., a speaker or a headphone) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultrareliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). For example, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band. For example, the plurality of antennas may include a patch array antenna and/or a dipole array antenna.

At least some of the above-described components may be coupled mutually and communicate signals (e.g., commands or data) therebetween via an interperipheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

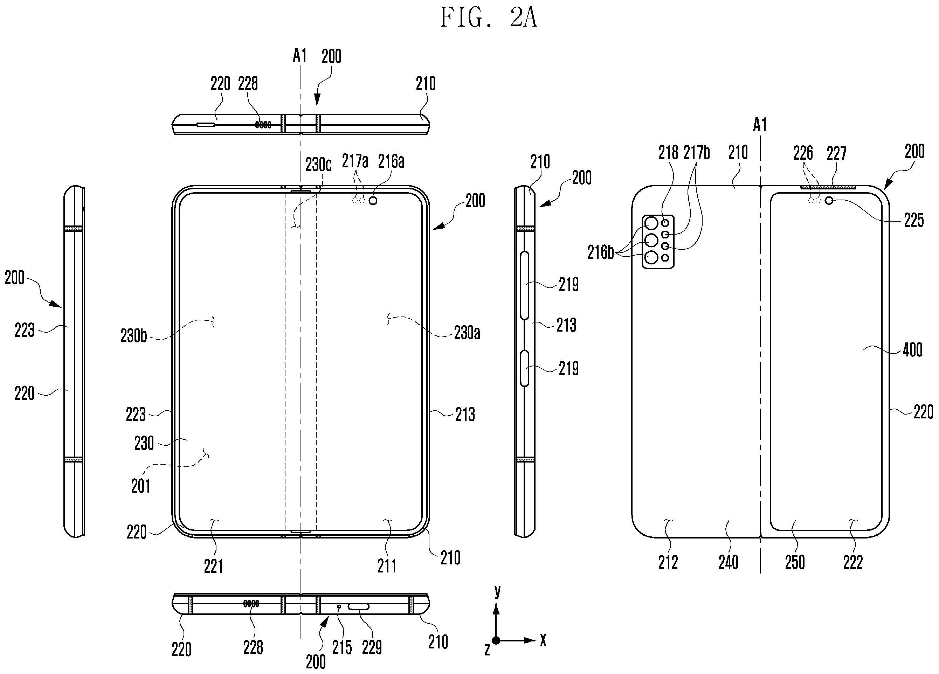

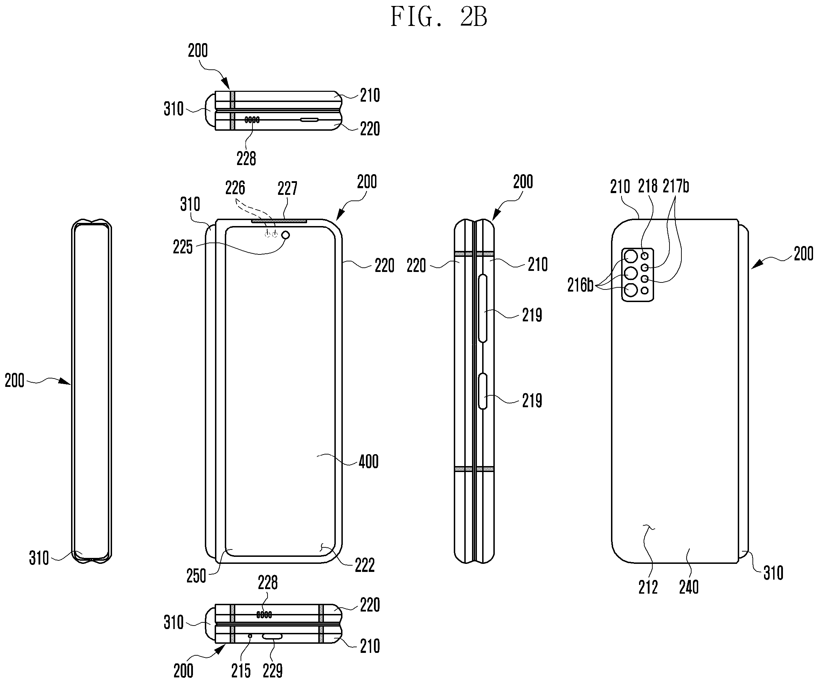

FIG. 2a is a view illustrating an unfolded state of an electronic device 200 according to various embodiments of the disclosure. FIG. 2b is a view illustrating a folded state of an electronic device 200 according to various embodiments of the disclosure.

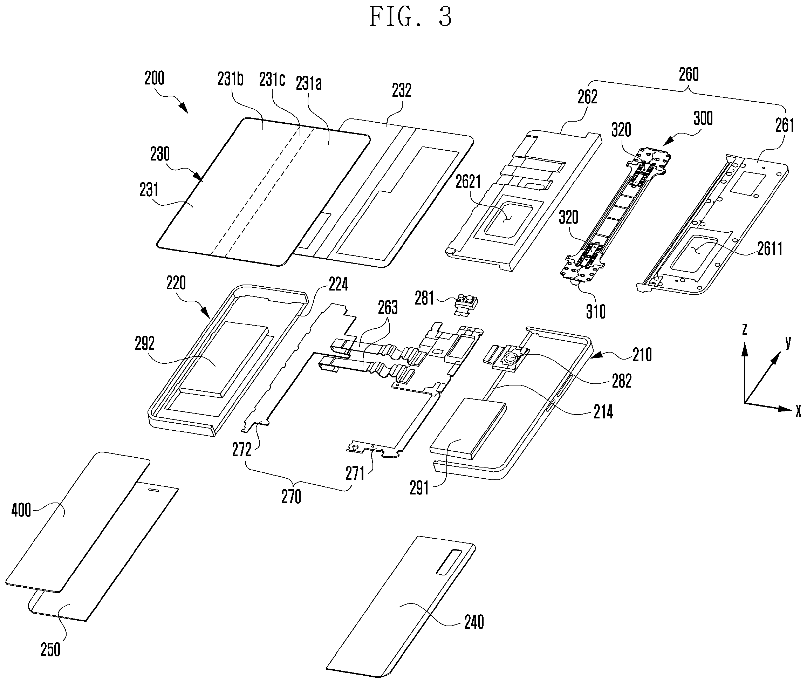

Referring to FIGS. 2a and 2b, an electronic device 200 (e.g., an electronic device 101 of FIG. 1) may include a pair of housings 210 and 220 (e.g., foldable housings) rotatably combined with each other based on a folding axis A1 through a hinge device (e.g., hinge device 300 of FIG. 3) so as to be folded with each other, a first display 230 (e.g., flexible display, foldable display, and/or main display) disposed through the pair of housings 210 and 220, and a second display 400 (e.g., sub-display). According to an embodiment, a hinge module (e.g., hinge module 320) of the hinge device (e.g., hinge device 300 of FIG. 3) may be disposed not to be seen from an outside through the first housing 210 and the second housing 220 in a folded state, and may be disposed not to be seen from the outside through a hinge housing 310 protecting the hinge device and covering a foldable part in an unfolded state. **In** the present document, a side on which the first display 230 is disposed may be defined as a front side of the electronic device 200, and an opposite side of the front side may be defined as a rear side of the electronic device 200. Further, a side surrounding a space between the front side and the rear side may be defined as a lateral side of the electronic device 200.

According to various embodiments, the pair of housings 210 and 220 may include the first housing 210 and the second housing 220 foldably disposed to each other through the hinge device (e.g., hinge device 300 of FIG. 3). According to an embodiment, the pair of housings 210 and 220 may not be limited to the shape and combination as illustrated in FIGS. 1 and 2, and may be implemented by a different shape or part combinations and/or association. According to an embodiment, the first housing 210 and the second housing 220 may be disposed on both sides around the folding axis A1, and may have a symmetric shape as a whole about the folding axis A1. According to a certain embodiment, the first housing 210 and the second housing 220 may be asymmetrically folded based on the folding axis A1. According to an embodiment, the first housing 210 and the second housing 220 may have different angles or distances between them depending on whether the electronic device 200 is in an unfolded state, a folded state, or an intermediate state.

According to various embodiments, in the unfolded state of the electronic device 200, the first housing 210 may be connected to the hinge device (e.g., hinge device 300 of FIG. 3), and may include a first side 211 disposed to be directed toward the front side of the electronic device 200, a second side 212 directed toward an opposite direction of the first side 211, and a first side member 213 surrounding at least a part of a first space between the first side 211 and the second side 212. According to an embodiment, the second housing 220 may be connected to the hinge device (e.g., hinge device 300 of FIG. 3) in the unfolded state of the electronic device 200, and may include a third side 221 disposed to be directed toward the front side of the electronic device 200, a fourth side 222 directed toward an opposite direction of the third side 221, and a second side member 223 surrounding at least a part of a second space between the third side 221 and the fourth side 222. According to an embodiment, the first side 211 may be substantially directed in the same direction as that of the third side 221 in the unfolded state, and may face the third side 221 in the folded state. According to an embodiment, the electronic device 200 may include a recess 201 formed to accommodate the first display 230 through structural combination of the first housing 210 and the second housing 220. According to an embodiment, the recess 201 may have substantially the same size as that of the first display 230.

According to various embodiments, the hinge housing 310 may be disposed between the first housing 210 and the second housing 220 so as to hide the hinge device (e.g., hinge device 300 of FIG. 3). According to an embodiment, the hinge housing 310 may be hidden or exposed to an outside by parts of the first housing 210 and the second housing 220 depending on the unfolded state, the folded state, or the intermediate state of the electronic device 200. For example, in the unfolded state of the electronic device 200, the hinge housing 310may be hidden by the first housing 210 and the second housing 220, and may not be exposed. According to an embodiment, in case that the electronic device 200 is in the folded state, the hinge housing 310 may be exposed to the outside between the first housing 210 and the second housing 220. According to an embodiment, in case of the intermediate state where the first housing 210 and the second housing 220 are folded with a certain angle, the hinge housing 310 may be at least partly exposed to the outside of the electronic device 200 between the first housing 210 and the second housing 220. For example, an area in which the hinge housing 310 is exposed to the outside may be smaller than that in a completely folded state. According to an embodiment, the hinge housing 310 may include a curved side.

According to various embodiments, in case that the electronic device 200 is in the unfolded state (e.g., state of FIG. 1), the first housing 210 and the second housing 220 form an angle of 180 degrees, and a first area 230a, a folding area 230c, and a second area 230b of the first display 230 may be disposed to form a plane and to be directed in the same direction. As another embodiment, in case that the electronic device 200 is in the unfolded state, the first housing 210 may be rotated at an angle of 360 degrees against the second housing 220, and may be reversely folded so that the second side 212 and the fourth side 222 face each other (out folding type).

According to various embodiments, in case that the electronic device 200 is in the folded state (e.g., state of FIG. 2), the first side 211 of the first housing 210 and the third side 221 of the second housing 220 may be disposed to face each other. In this case, the first area 230a and the second area 230b of the first display 230 may form a narrow angle (e.g., in the range of 0 to 10 degrees) with each other through the folding area 230c, and may be disposed to face each other. According to an embodiment, at least a part of the folding area 230c may be formed as a curved side having a certain curvature radius. According to an embodiment, in case that the electronic device 200 is in the intermediate state, the first housing 210 and the second housing 220 may be disposed with a certain angle. **In** this case, the first area 230a and the second area 230b of the first display 230 may form an angle that is larger than the angle in the folded state and smaller than the angle in the unfolded state, and the curvature radius of the folding area 230c may be larger than that in the folded state. **In** a certain embodiment, the first housing 210 and the second housing 220 may form a designated folding angle at which they stop folding between the folded state and the unfolded state through the hinge device (e.g., hinge device 300 of FIG. 3) (free stop function). **In** a certain embodiment, the first housing 210 and the second housing 220 may operate as being pressed in a folding direction or in an unfolding direction based on a designated inflection angle through the hinge device (e.g., hinge device 300 of FIG. 3).

According to various embodiments, the electronic device 200 may include at least one of displays 230 and 400 disposed on the first housing 210 and/or the second housing 220, an input device 215, sound output devices 227 and 228, sensor modules 217a, 217b, and 226, camera modules 216a, 216b, and 225, a key input device 219, an indicator (not illustrated), or a connector port 229. In a certain embodiment, the electronic device 200 may omit at least one of constituent elements, or may additionally include at least one of other constituent elements.

According to various embodiments, the at least one display 230 and 400 may include the first display 230 (e.g., flexible display) disposed to be supported by the third side 221 of the second housing 220 through the hinge device (e.g., hinge device 300 of FIG. 3) from the first side 211 of the first housing 210, and the second display 400 disposed to be seen from the outside through the second side 212 in the inner space of the first housing 210. As another example, the second display 400 may be arranged in the inner space of the second housing 220 to be visible from the outside through the fourth surface 222. According to an embodiment, the first display 230 may be mainly used in the unfolded state of the electronic device 200, and the second display 400 may be mainly used in the folded state of the electronic device 200. According to an embodiment, in the intermediate state of the electronic device 200, the first display 230 or the second display 400 may be used based on the folding angle of the first housing 210 and the second housing 220.

According to various embodiments, the first display 230 may be disposed in a space formed by the pair of housings 210 and 220. For example, the first display 200 may be seated in a recess 201 formed by the pair of housings 210 and 220, and may be disposed to occupy substantially most of the front side of the electronic device 200. According to an embodiment, the first display 230 may include the flexible display of which at least a partial area can be transformed into a planar or curved side. According to an embodiment, the first display 230 may include the first area 230a facing the first housing 210, the second area 230b facing the second housing 220, and the folding area 230c connecting the first area 230a and the second area 230b, and facing the hinge device (e.g., hinge device 300 of FIG. 3). According to an embodiment, the area division of the first display 230 is merely an exemplary physical division by a pair of housings 210 and 220 and the hinge device (e.g., hinge device 300 of FIG. 3), and the first display 230 may substantially display one seamless full screen through the pair of housings 210 and 220 and the hinge device (e.g., hinge device 300 of FIG. 3). According to an embodiment, the first area 230a and the second area 230b may have a symmetric shape as a whole based on the folding area 230c, or may have a partly asymmetric shape.

According to various embodiments, the electronic device 200 may include a first rear cover 240 disposed on the second side 212 of the first housing 210, and a second rear cover 250 disposed on the fourth side 222 of the second housing 220. In a certain embodiment, at least a part of the first rear cover 240 may be formed in a body with the first side member 213. In a certain embodiment, at least a part of the second rear cover 250 may be formed in a body with the second side member 223. According to an embodiment, at least one of the first rear cover 240 and the second rear cover 250 may be formed through a substantially transparent plate (e.g., glass plate including various coating layers or polymer plate) or an opaque plate. According to an embodiment, the first rear cover 240 may be formed through a substantially transparent plate, such as glass or polymer. According to an embodiment, the second rear cover 250 may be formed through the opaque plate, such as coated or colored glass, ceramic, polymer, metal (e.g., aluminum, stainless steel (STS), or magnesium), or a combination of at least two of the above materials. Accordingly, the second display 400 may be disposed to be seen from the outside through the second rear cover 250 in the inner space of the second housing 220.

According to various embodiments, the input device 215 may include a microphone. In a certain embodiment, the input device 215 may include a plurality of microphones disposed to be able to detect the direction of sound. According to an embodiment, the sound output devices 227 and 228 may include speakers. According to an embodiment, the sound output devices 227 and 228 may include a call receiver 227 disposed through the fourth side 222 of the second housing 220 and an external speaker 228 disposed through the side member of the second housing 220. In a certain embodiment, the input device 215, the sound output devices 227 and 228, and the connector 229 may be disposed in the spaces of the first housing 210 and/or the second housing 220, and may be exposed to an external environment through at least one hole formed on the first housing 210 and/or the second housing 220. In a certain embodiment, the holes formed on the first housing 210 and/or the second housing 220 may be commonly used for the input device 215 and the sound output devices 227 and 228. In a certain embodiment, the sound output devices 227 and 228 may include a speaker (e.g., piezo-electric speaker) operating in a state where the holes formed on the first housing 210 and/or the second housing 220 are excluded.

According to various embodiments, the camera modules 216a, 216b, and 225 may include the first camera module 216a disposed on the first side 211 of the first housing 210, the second camera module 216b disposed on the second side 212 of the first housing 210, and/or the third camera module 225 disposed on the fourth side 222 of the second housing 220. According to an embodiment, the electronic device 200 may include a flash 218 disposed near the second camera module 216b. According to an embodiment, the flash 218 may include, for example, a light emitting diode or a xenon lamp. According to an embodiment, the camera modules 216a, 216b, and 225 may include one or a plurality of lenses, an image sensor, and/or an image signal processor. In a certain embodiment, at least one of the camera modules 216a, 216b, and 225 may include two or more lenses (wide-angle lens and telephoto lens) and image sensors, and may be disposed together on any one side of the first housing 210 and/or the second housing 220.

According to various embodiments, the sensor modules 217a, 217b, and 226 may generate electrical signals or data values corresponding to an internal operation state of the electronic device 200 or an external environment state. According to an embodiment, the sensor modules 217a, 217b, and 226 may include the first sensor module 217a disposed on the first side 211 of the first housing 210, the second sensor module 217b disposed on the second side 212 of the first housing 210, and/or the third sensor module 226 disposed on the fourth side 222 of the second housing 220. In a certain embodiment, the sensor modules 217a, 217b, and 226 may include at least one of a gesture sensor, a grip sensor, a color sensor, an infrared (IR) sensor, an illuminance sensor, an ultrasonic sensor, an iris recognition sensor, or a distance detection sensor (TOF sensor or RiDAR scanner).

According to various embodiments, the electronic device 200 may further include at least one of non-illustrated sensor modules, for example, a barometric pressure sensor, a magnetic sensor, a biosensor, a temperature sensor, a humidity sensor, or a fingerprint recognition sensor. In a certain embodiment, the fingerprint recognition sensor may be disposed through at least one of the first side member 213 of the first housing 210 and/or the second side member 223 of the second housing 220.

According to various embodiments, the key input device 219 may be disposed to be exposed to the outside through the first side member 213 of the first housing 210. In a certain embodiment, the key input device 219 may be disposed to be exposed to the outside through the second side member 223 of the second housing 220. In a certain embodiment, the electronic device 200 may not include parts or all of the above-mentioned key input devices 219, and the key input device 219 that is not included may be implemented in other forms, such as a soft key, on the at least one display 230 and 400. As another embodiment, the key input device 219 may be implemented using a pressure sensor included in the at least one display 230 and 400.

According to various embodiments, the connector port 229 may accommodate connectors (e.g., USB connector or interface connector port (IF) module) for transmitting or receiving a power and/or data to or from an external electronic device. In a certain embodiment, the connector port 229 may perform a function for transmitting or receiving an audio signal to or from the external electronic device together, or may further include a separate connector port (e.g., ear-jack hole) for performing audio signal transmission/reception.

According to various embodiments, at least one camera device 216a and 225 among the camera modules 216a, 216b, and 225, at least one sensor module 217a and 226 among the sensor modules 217a, 217b, and 226, and/or the indicator may be disposed to be exposed through the at least one display 230 and 400. For example, the at least one camera modules 216a and 225, the at least one sensor module 217a and 226, and/or the indicator may be disposed under a display area of the displays 230 and 240 in the inner space of the at least one housing 210 and 220, and may be disposed to come in contact with the external environment through an opening perforated up to the cover member (e.g., window layer (not illustrated) of the first display 230 and/or the second rear cover 250). According to an embodiment, an area in which the displays 230 and 400 and one or more camera module 216a and 225 face each other may be formed as a transmission area having a predetermined transmittance as a part of a content display area. According to an embodiment, the transmission area may have a transmittance in the range of about 5% to about 20%. The transmission area may include an area overlapping the effective area (e.g., a view angle area) of at least one camera module 216a or 225 through which light imaged by an image sensor to generate an image passes. For example, the transmission area of the displays 230 and 400 may include an area having a lower pixel density than the periphery. For example, a transmission area may replace the opening. For example, the at least one camera module 216a or 225 may include an under-display camera (UDC). As another embodiment, some camera modules or sensor modules 217a and 226 may be arranged to perform the functions thereof without being visually exposed through a display. For example, the areas facing the camera modules 216a and 225 and/or the sensor modules 217a and 226 arranged under the displays 230 and 400 (e.g., a display panel) have an under-display camera (UDC) structure, and may not require a perforated opening.

FIG. 3 is an exploded perspective view of an electronic device 200 according to various embodiments of the disclosure.

Referring to FIG. 3, the electronic device 200 may include the first display 230, the second display 400, a support member assembly 260, at least one printed circuit board 270, the first housing 210, the second housing 220, the first rear cover 240, and the second rear cover 250.

According to various embodiments, the first display 230 may include a display panel 231 (e.g., flexible display panel), and one or more plates 232 or layers on which the display panel 231 (e.g., flexible display panel) is seated. According to an embodiment, a display panel 231 may include a first panel area 231a corresponding to a first area (e.g., the first area 230a in FIG. 1) of the display 230, a second panel area 231b extending from the first panel area and corresponding to a second area (e.g., the second area 230b in FIG. 1) of the display 230, and a third area 231c interconnecting the first panel area 231a and the second panel area 231b and corresponding to a folding area (e.g., the folding area 230c in FIG. 1) of the display 230. According to an embodiment, the one or more plates 232 may include a conductive plate (e.g., Cu sheet or SUS sheet) disposed between the display panel 231 and the support member assembly 260. According to an embodiment, the one or more plates 232 may be formed to have substantially the same area as that of the first display 230, and the area facing the folding area 230c of the first display 230c may be bendably formed. According to an embodiment, the one or more plates 232 may include at least one subsidiary material layer (e.g., graphite member) disposed on the rear side of the display panel 231. According to an embodiment, the one or more plates 232 may be formed in the shape corresponding to the display panel 231.

According to various embodiments, the second display 400 may be disposed in a space between the second housing 220 and the second rear cover 250. According to an embodiment, the second display 400 may be disposed to be seen from the outside through substantially the total area of the second rear cover 250 in the space between the second housing 220 and the second rear cover 250.

According to various embodiments, the support member assembly 260 may include a first support member 261 (e.g., the first support plate) and a second support member 262 (e.g., the second support plate). According to an embodiment, the first support member 261 may be foldably coupled to the second support member 262 via the hinge device 300. According to one embodiment, the electronic device 200 may include at least one wiring member 263 (e.g., a flexible printed circuit board (FPCB) extending from at least a portion of the first support member 261 across the hinge device 300 to a portion of the second support member 262. According to an embodiment, the support member assembly 260 may be arranged between the at least one plate 232 and the at least one printed circuit board 270. According to an embodiment, the first support member 261 may be arranged between the first area (e.g., the first area 230a in FIG. 1) of the first display 230 and the first printed circuit board 271. According to an embodiment, the second support member 262 may be arranged between the second area (e.g., the second area 230b in FIG. 2) of the first display 230 and the second printed circuit board 272. According to an embodiment, at least a portion of the at least one wiring member 263 and/or the hinge device 300 may be arranged to be supported via at least a portion of the support member assembly 260. According to an embodiment, the at least one wiring member 263 may be arranged in a direction across the first support member 261 and the second support member 262 (e.g., in the x-axis direction). According to an embodiment, the at least one wiring member 263 may be arranged in a direction substantially perpendicular to the folding axis (e.g., the y-axis or the folding axis A1 in FIG. 1) of the folding area 230c (e.g., in the x-axis direction).

According to various embodiments, the at least one printed circuit board 270 may include a first printed circuit board 271 disposed to face the first support member 261 and a second printed circuit board 272 disposed to face the second support member 262. According to an embodiment, the first printed circuit board 271 and the second printed circuit board 272 may be disposed in the inner space that is formed by the support member assembly 260, the first housing 210, the second housing 220, the first rear cover 240, and/or the second rear cover 250. According to an embodiment, the first printed circuit board 271 and the second printed circuit board 272 may include a plurality of electronic components disposed to implement various functions of the electronic device 200. In some embodiments, the first support member 261 is a component of the first housing 210 and may at least partially extend from the first side member 213 to a first space (e.g., a first inner space) defined by the first housing 210. In some embodiments, the second support member 262 is a component of the second housing 220 and may at least partially extend from the second side member 223 to a second space (e.g., a second inner space) defined by the second housing 220.

According to various embodiments, the electronic device 200 may include a first printed circuit board 271 arranged in the first space of the first housing 210, a first battery 291 arranged at a position facing a first swelling hole 2611 in the first support member 261, at least one camera module 282 (e.g., the first camera module 216a and/or the second camera module 216b in FIG. 1), or at least one sensor module 281 (e.g., the first sensor module 217a and/or the second sensor module 217b in FIG. 1). According to an embodiment, the electronic device 200 may include a second printed circuit board 272 arranged in the second space of the second housing 220, or a second battery 292 arranged at a position facing a second swelling hole 2621 in the second support member 262. According to an embodiment, the first housing 210 and the first support member 261 may be integrated with each other. According to an embodiment, the second housing 220 and the second support member 262 may be integrated with each other.

According to various embodiments, the first housing 210 may include a first rotation support side 214, and the second housing 220 may include a second rotation support side 224 corresponding to the first rotation support side 214. According to an embodiment, the first rotation support side 214 and the second rotation support side 224 may include a curved side corresponding (naturally connected) to a curved side included in the hinge housing 310. According to an embodiment, in the unfolded state of the electronic device 200, the first rotation support side 214 and the second rotation support side 224 may cover the hinge housing 310, and may not expose the hinge housing 310 to the rear side of the electronic device 200, or may minimally expose the hinge housing 310. According to an embodiment, in the folded state of the electronic device 200, the first rotation support side 214 and the second rotation support side 224 may be rotated along the curved side included in the hinge housing 310, and may maximally expose the hinge housing 310 to the rear side of the electronic device 200.

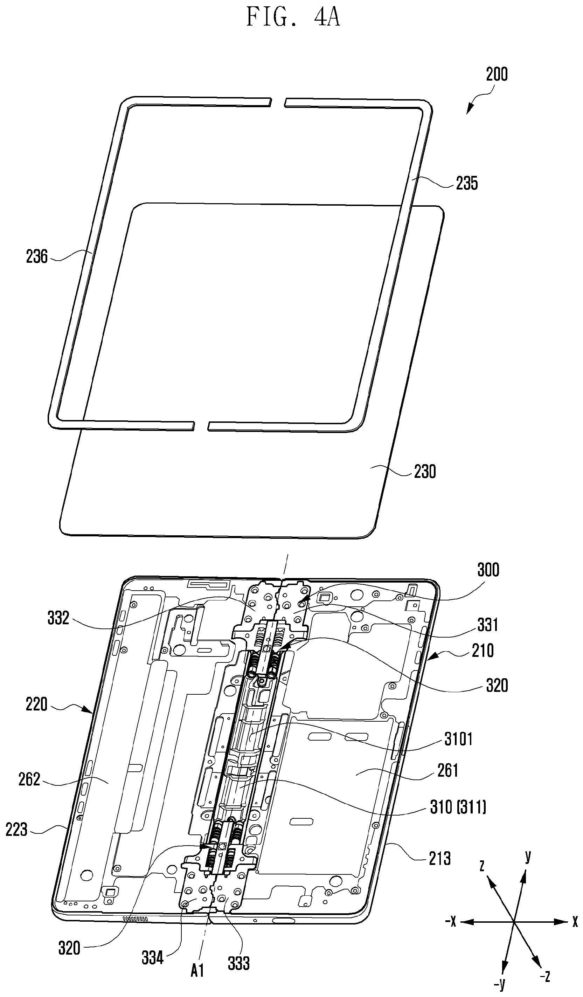

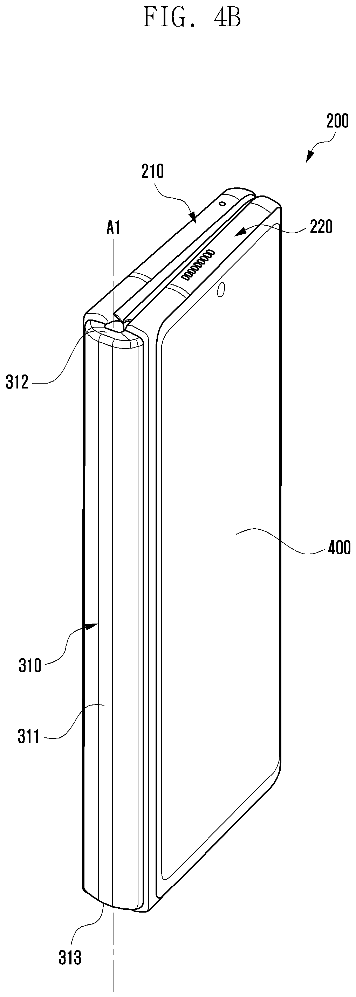

According to various embodiments, the hinge device 300 may include a hinge housing 310 and at least one hinge module 320 arranged in an accommodation portion (e.g., the accommodation portion 3101 in FIG. 4) of the hinge housing 310. According to an embodiment, the hinge module 320 may be fixed to the accommodation portion 3101 of the hinge housing 310, and may be connected to the first support member 261 and the second support member 262 via at least one rotator (e.g., the rotators 331, 332, 333, and 334 in FIG. 4A).

FIG. 4A is an exploded perspective view of the electronic device according to various embodiments of the disclosure. FIG. 4B is a perspective view illustrating the electronic device according to various embodiments of the disclosure in the folded state.

Referring to FIGS. 4A and 4B, the electronic device 200 includes a first housing 210 including a first side member 213, a second housing 220 including a second side member 223, a hinge device 300 interconnecting the first housing 210 and the second housing 220 to be rotatable relative to each other, and a display 230 (e.g., the first display 230 in FIG. 1) arranged to be supported by the first housing 210, the hinge device 300, and the second housing 220. According to an embodiment, the electronic device 200 may further include a first protective frame 235 coupled to the first housing 210 and a second protection frame 236 coupled to the second housing 220 with the edges of the display 230 interposed therebetween. According to an embodiment, the first housing 210 and the second housing 220 may be operated to be folded or unfolded relative to each other about the folding axis A1 via the hinge device 300.

According to various embodiments, the hinge device 300 may include a hinge housing 310 having a length in a direction substantially parallel to the folding axis A1 (e.g., the y-axis direction) and including an accommodation portion 3101 and at least one hinge module 320 fixed to the accommodation portion 3101 of the hinge housing 310. According to an embodiment, the at least one hinge module 320 may include one or more plate-type rotators 331, 332, 333, or 334 connecting the first housing 210 and the second housing 220 to be foldable relative to each other. According to an embodiment, the hinge housing 310 may include a cover portion 311 arranged to have a length along the folding axis A1, a first closed end 312 extending from one end of the cover portion 311, and a second closed end 313 (a second closed end) extending from the other end of the cover portion 311. According to an embodiment, the accommodation portion 3101 may be provided through the cover portion 311, the first closed end 312, and the second closed end 313. According to an embodiment, the cover portion 311 may include a curved outer surface and, when folded, may be exposed to be at least partially visible to the outside. According to an embodiment, the accommodation portion 3101 may be opened in a direction toward the display 230 and may have a fixing structure and/or a seating structure to which at least one hinge module 320 can be fixed. According to an embodiment, the at least one hinge module 320 may provide a pressing force in a folded direction or an unfolded direction about an inflection point via a hinge shaft, a hinge cam, and a hinge spring, which are sequentially arranged in a direction substantially parallel to the folding axis A1 although not denoted by reference numerals, during the folding operation and/or the unfolding operation of the electronic device via the cam member that presses the hinge cam in the longitudinal direction of the hinge shaft.

According to various embodiments, the one or more rotator 331, 332, 333, and 334 may include a first rotator 331 coupled to the first support member 261 of the first housing 210 near the first closed end 312, which is the upper area of the hinge housing 310, a second rotator 332 coupled to the second support member 262 of the second housing 220 near the first closed end 312, which is the upper area of the hinge housing, a third rotator 333 coupled to the first support member 261 of the first housing 210 near the second closed end 313, which is the lower area of the hinge housing 310, and a fourth rotator 334 coupled to the second support member 262 of the second housing 220 near the second closed end 313, which is the lower area of the hinge housing. According to an embodiment, the one or more rotators 331, 332, 333, and 334 may be coupled to the first support member 261 and the second support member 262 via fastening members such as screws. According to an embodiment, the hinge housing 310 may be connected to the first housing 210 and the second housing 220 via at least one hinge module 320. According to an embodiment, the at least one hinge module 320 including the one or more rotators 331, 332, 333, and 334 may be coupled to the first support member 261 and the second support member 261 to have a substantially flat surface in order to accommodate the display 262.

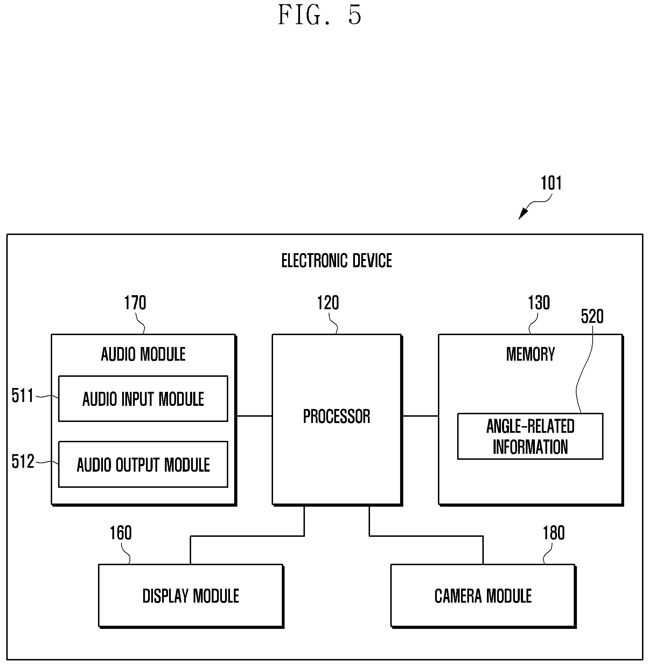

FIG. 5 is a block diagram of an electronic device according to an embodiment of the disclosure.

The electronic device 101 of FIG. 5 (e.g., the electronic device 101 of FIG. 1) may be at least partially similar to the electronic device 200 of FIGS. 2A and 2B, or may further include other embodiments of the electronic device. The electronic device 101 may include a foldable electronic device including a plurality of housings (e.g., a first housing 210 and a second housing 220 in FIG. 2A).

According to an embodiment, the electronic device 101 may include a foldable electronic device including a first housing 210, a hinge module (e.g., the hinge module 320 of FIG. 3) connected to one end of the first housing 210, and a second housing 220 foldably connected to the first housing 210 via the hinge module 320. For example, the hinge module 320 may be disposed between the first housing 210 and the second housing 220, and may be structurally coupled to the first housing 210 and the second housing 220.

According to an embodiment, the electronic device 101 may operate in a folded state in which the first housing 210 and the second housing 220 are disposed to face each other around a hinge module 320, or may operate in an unfolded state in which the front surface (e.g., the first surface 211 in FIG. 2A) of the first housing 210 and the front surface (e.g., the third surface 221 in FIG. 2A) of the second housing 220 are oriented in the same direction (e.g., a state in which an angle formed between the first housing 210 and the second housing 220, such as an opening/closing angle, is about 180 degrees). The electronic device 101 may include an in-folding electronic device. For example, when the folded state is released and the angle formed between the first housing 210 and the second housing 220 falls within a predetermined range (e.g., from about 1 degree to less than about 180 degrees), the electronic device 101 may operate in an intermediate state.

According to an embodiment, the electronic device 101 may further include an out-folding electronic device in which the rear surface (e.g., the second surface 212 in FIG. 2A) of the first housing 210 and the rear surface (e.g., the fourth surface 222 in FIG. 2A) of the second housing 220 are disposed to face each other about the hinge module 320. For example, the out-folding electronic device may operate in an intermediate state when the angle formed between the first housing 210 and the second housing 220 falls within a predetermined range (e.g., from about 180 degrees to less than about 360 degrees).

According to an embodiment, the electronic device 101 may include at least one microphone (e.g., an audio input module 511) and at least one speaker (e.g., an audio output module 512). For example, the electronic device 101 may output an audio signal using the at least one speaker and may acquire (e.g., input) the output audio signal using the at least one microphone. According to an embodiment, the electronic device 101 may identify an angle formed between the first housing 210 and the second housing 220 based on a time difference between a time point at which the audio signal is output and a time point at which the audio signal is input.

According to an embodiment, the electronic device 101 may capture an image using a camera (e.g., the camera module 180 of FIG. 1) and may recognize a specific object by analyzing the captured image. For example, the electronic device 101 may distinguish and recognize a first region corresponding to the display of the electronic device 101 and a second region corresponding to an external background based on the captured image. According to an embodiment, the electronic device 101 may distinguish a length and a region related to a specific object based on the captured image and may identify a ratio based on at least one of the length and the region. The electronic device 101 may identify the angle formed between the first housing 210 and the second housing 220 based on the identified ratio.

According to an embodiment, the electronic device 101 may recognize the angle formed between the first housing 210 and the second housing 220 in a segmented manner and may perform a function corresponding to a configured angle range when the recognized angle falls within the configured angle range. Referring to FIG. 5, the electronic device (e.g., the electronic device 101 of FIG. 1 or the electronic device 200 of FIG. 2A) may include a processor (e.g., the processor 120 of FIG. 1), memory (e.g., the memory 130 of FIG. 1), a display module (e.g., the display module 160 of FIG. 1), an audio module (e.g., the audio module 170 of FIG. 1), and/or a camera module (e.g., the camera module 180 of FIG. 1). According to an embodiment, the audio module 170 may include an audio input module 511 configured to acquire an audio signal, such as a microphone, and an audio output module 512 configured to output an audio signal, such as a speaker. According to an embodiment, the memory 130 may include angle-related information 520 used in identifying the angle formed between the first housing 210 and the second housing 220 of the electronic device 101.

According to an embodiment, the processor 120 of the electronic device 101 may execute a program (e.g., the program 140 of FIG. 1) stored in the memory 130 to control at least one other component (e.g., a hardware or software component), and may perform various types of data processing or computations. According to an embodiment, the processor 120 may be operatively, functionally, and/or electrically connected to the memory 130, the display module 160, the audio module 170, and/or the camera module 180.

According to an embodiment, the memory 130 may store angle-related information 520 for identifying or measuring an angle formed between the first housing 210 and the second housing 220 of the electronic device 101. For example, the angle-related information 520 may include angle information corresponding to a time difference related to the input and/or output of an audio signal. For example, the processor 120 may identify a time difference based on the input or output of an audio signal and may determine the angle formed between the first housing 210 and the second housing 220 based on the identified time difference. According to an embodiment, the angle-related information 520 may include angle information corresponding to a ratio value related to the first region occupied by the display in a captured image and the second region, other than the display, occupied by the background (e.g., an external environment). According to an embodiment, the processor 120 may analyze an image captured using a camera (e.g., the camera module 180) to identify the first region occupied by the display and the second region occupied by the background, and may determine the angle formed between the first housing 210 and the second housing 220 based on the ratio value between the first region and the second region.

According to an embodiment, the angle-related information 520 may include a plurality of angle ranges (e.g., a first angle range and a second angle range) corresponding to angles formed between the first housing 210 and the second housing 220. For example, when the angle formed between the first housing 210 and the second housing 220 falls within the first angle range, the processor 120 may perform a first function (e.g., a first operation or a first process) configured based on the first angle range. For example, when the angle formed between the first housing 210 and the second housing 220 falls within the second angle range, the processor 120 may perform a second function (e.g., a second operation or a second process) configured based on the second angle range. According to an embodiment, the electronic device 101 may recognize the angle formed between the first housing 210 and the second housing 220 in a segmented manner into a plurality of angle ranges, and may perform a specific function corresponding to the recognized angle.

According to an embodiment, the display module 160 (e.g., the display module 160 of FIG. 1) may be disposed so as to be at least partially coupled to the housings 210 and 220 to correspond to the front surfaces (e.g., the first surface 211 and the third surface 221 of FIG. 2A) constituting the housings 210 and 220 (e.g., the first housing 210 and the second housing 220) of the electronic device 101. The display module 160 may include a display panel configured to display a screen and a digitizer configured to recognize electromagnetic input signals. For example, the display module 160 may include the first display 230 and the second display 400 of FIG. 2A. According to an embodiment, the processor 120 may display a screen of a program (e.g., an application) via the display module 160 (e.g., a display panel) in response to execution of the program stored in the memory 130. According to an embodiment, the display module 160 may include a flexible display that is at least partially bendable in response to a change in the state of the first housing 210 and the second housing 220 (e.g., the folded state, the unfolded state, or the intermediate state). According to an embodiment, the display module 160 may allow configuration information (e.g., brightness information) to be adjusted based on the angle formed between the first housing 210 and the second housing 220.

According to an embodiment, the processor 120 may supply power to a digitizer included in the display module 160 according to a configured cycle. For example, the processor 120 may detect a change in an electromagnetic field in the surroundings based on the digitizer. According to an embodiment, in the folded state, the electronic device 101 may be in a state in which the first display 230 and the second display 400 of the display module 160 face each other. For example, in the folded state, the electromagnetic field based on the digitizer may maintain a configured value. According to an embodiment, in response to a release of the folded state, the electromagnetic field may change, and the processor 120 of the electronic device 101 may detect the release of the folded state based on the change in the electromagnetic field. According to an embodiment, the electronic device 101 may detect that the folded state has been released using the display module 160. According to an embodiment, the electronic device 101 is not limited to the digitizer of the display module 160 in detecting the release of the folded state. For example, the electronic device 101 may detect the release of the folded state using a Hall IC and a magnetic member. According to an embodiment, the electronic device 101 may include a grip sensor disposed in a partial region of the housing, and may identify whether the electronic device is being gripped based on a specific grip action using the grip sensor. When a grip based on a specific grip action is detected, the electronic device 101 may determine that the folded state has been released. According to an embodiment, the electronic device 101 is not limited to a specific method for detecting the release of the folded state, and may detect the release using various methods (e.g., various types of sensor modules). For example, the electronic device 101 may detect whether the folded state has been released using at least one of a digitizer of the display module 160, a Hall IC, a magnetic member, an accelerometer, a gyro sensor, a geomagnetic sensor, a contact switch, an ambient light sensor, a proximity sensor, and/or a touch sensor.

According to an embodiment, the audio module 170 (e.g., the audio module 170 of FIG. 1) may include at least one audio input module 511 (e.g., a microphone) and at least one audio output module 512 (e.g., a speaker). For example, the audio input module 511 may acquire an audio signal generated externally and may include a microphone that is at least partially exposed to the outside. The audio input module 511 may include a plurality of microphones and may be disposed in at least one of the first housing 210 and the second housing 220. The audio output module 512 may include a speaker configured to output an audio signal to an external environment. For example, the audio output module 512 may output an audio signal to the outside, and the audio input module 511 may acquire at least a portion of the output audio signal.

According to an embodiment, the processor 120 may output an audio signal (e.g., a voice signal) through the audio output module 512 and may acquire the output audio signal through the audio input module 511. For example, the audio input module 511 and the audio output module 512 may be disposed in different housings, respectively, and a physical distance therebetween may vary depending on the state of the electronic device 101 (e.g., the unfolded state, the folded state, or the intermediate state). According to an embodiment, in the process in which the audio signal output through the audio output module 512 is input to the audio input module 511, the acquisition time of the audio signal may become relatively delayed as the physical distance increases. For example, as the physical distance increases, the time taken for the audio signal to be transmitted may become relatively longer. According to an embodiment, the electronic device 101 may identify a time difference value between the output and input of an audio signal, and may identify the angle formed between the first housing 210 and the second housing 220 based on the time difference value. According to an embodiment, the electronic device 101 may adjust configuration information corresponding to at least one of the audio input module 511 and the audio output module 512 based on the identified angle. For example, the processor 120 may adjust a time point at which an audio signal is acquired through the audio input module 511 based on the identified angle, and an echo phenomenon may be prevented or reduced. For example, based on the identified angle, the processor 120 may change the volume and sound quality of an audio signal output through the audio output module 512, and a sound field effect according to the output of the audio signal may be enhanced. According to an embodiment, usability and convenience may be improved when the electronic device 101 is utilized as an audio device.

According to an embodiment, the camera module 180 (e.g., the camera module 180 of FIG. 1) may be at least partially disposed to correspond to the front surfaces (e.g., the first surface 211 and the third surface 221 of FIG. 2A) of the housings 210 and 220 (e.g., the first housing 210 and the second housing 220). For example, the camera module 180 may be disposed in a region of the display module 160 or may be disposed to at least partially overlap the display module 160. The camera module 180 may be at least partially disposed under the display panel included in the display module 160, and may perform image capturing through the display panel. According to an embodiment, the camera module 180 may be in an inactive state when the electronic device 101 is in the folded state. For example, the processor 120 may detect a situation in which the folded state is released based on the display module 160, and may switch the camera module 180 from an inactive state to an active state in response to the release of the folded state.

According to an embodiment, the processor 120 may capture at least one image using the camera module 180 that has been switched to the active state. For example, the electronic device 101 may be transitioning from the folded state to the intermediate state or from the folded state to the unfolded state. The processor 120 may identify a first region corresponding to the display module 160 and a second region corresponding to an external background based on the at least one captured image. According to an embodiment, the electronic device 101 may distinguish the first region and the second region included in the image, and may identify the angle formed between the first housing 210 and the second housing 220 based on the ratio of the first region to the entire image region. According to an embodiment, the electronic device 101 may adjust configuration information (e.g., brightness information) corresponding to the display module 160 based on the identified angle. For example, when the identified angle is equal to or greater than a configured angle, the processor 120 may adjust the brightness of the display module 160 to a first brightness value, and when the identified angle is less than the configured angle, the processor 120 may adjust the brightness of the display module 160 to a second brightness value. The first brightness value may be configured to be relatively greater than the second brightness value. For example, the display module 160 with the first brightness value may be displayed relatively brighter than the display module 160 with the second brightness value.

According to an embodiment, the electronic device 101 (e.g., a foldable electronic device) including the first housing 210 and the second housing 220 may identify a time difference value between the output and input of an audio signal based on the audio input module 511 and the audio output module 512. The electronic device 101 may identify the angle formed between the first housing and the second housing based on the identified time difference value.

According to an embodiment, the electronic device 101 may capture an image using the camera module 180 and may identify a ratio value representing a proportion occupied by a first region corresponding to the display module 160 in the entire image region. The electronic device 101 may identify the angle formed between the first housing and the second housing based on the identified ratio value.

According to an embodiment, the electronic device 101 may detect a change in a surrounding electromagnetic field based on the digitizer included in the display module 160, and may determine whether the folded state of the electronic device 101 has been released based on the detected change in the electromagnetic field. According to an embodiment, the electronic device 101 may activate at least one of the audio module 170 and the camera module 180 in response to the release of the folded state, and may identify the angle formed between the first housing and the second housing using the activated component. The electronic device 101 may operate in one of the intermediate state or the unfolded state when the folded state is released.

According to an embodiment, the electronic device 101 may identify the angle formed between the first housing and the second housing, and may perform a configured function (e.g., adjustment of configuration information related to the audio module 170 or the display module 160) based on the identified angle.

According to an embodiment, a foldable electronic device (e.g., the electronic device 101 of FIG. 5) may include a first housing structure (e.g., the first housing 210 of FIG. 2A) having at least one audio output module 512 disposed therein, a second housing structure (e.g., the second housing 220 of FIG. 2A) configured to be disposed to face the first housing structure 210 in a folded state and having at least one audio input module 511 disposed therein, a hinge module (e.g., the hinge module 320 of FIG. 3) disposed between the first housing structure 210 and the second housing structure 220, memory 130, and a processor 120 operatively connected to the at least one audio input module 511, the at least one audio output module 512, and the memory 130. According to an embodiment, the processor 120 may output an audio signal based on the at least one audio output module 512 in response to a release of the folded state between the first housing structure 210 and the second housing structure 220. The processor 120 may acquire the output audio signal based on the at least one audio input module 511. The processor 120 may identify a time difference value between the output and acquisition of the audio signal. The processor 120 may identify an angle formed between the first housing structure 210 and the second housing structure 220 based on the identified time difference value.

According to an embodiment, the memory 130 of the foldable electronic device 101 may store angle-related information 520. The processor 120 may be configured to compare the angle-related information 520 with the identified time difference value, and to identify an angle formed between the first housing structure 210 and the second housing structure 220 corresponding to the time difference value.

According to an embodiment, the processor 120 may be configured to identify a first time difference value based on a first time point at which an audio signal is output through the at least one audio output module 512 and a (2-1)^{th} time point at which the output audio signal is acquired via a first audio input module 511. The processor 120 may be configured to identify a second time difference value based on the first time point and a (2-2)^{th} time point at which the output audio signal is acquired through a second audio input module 511. The processor 120 may be configured to identify the angle formed between the first housing structure 210 and the second housing structure 220 based on the first time difference value and the second time difference value.

According to an embodiment, the first housing structure 210 may include a first surface 211 oriented in a first direction and a second surface 212 oriented in a second direction opposite to the first direction, and the second housing structure may include a third surface 221 oriented in a third direction and a fourth surface 222 oriented in a fourth direction opposite to the third direction. According to an embodiment, the foldable electronic device 101 may operate in one of a folded state in which the first surface 211 is disposed to face the third surface 221, an unfolded state in which the first surface 211 and the third surface 221 are disposed such that the first direction and the third direction are substantially the same, and an intermediate state other than the folded state and the unfolded state.

According to an embodiment, the foldable electronic device 101 may further include a flexible display 160 disposed based on the first surface 211 of the first housing structure 210 and the third surface 221 of the second housing structure 220, and configured such that, in the folded state, the first surface 211 faces the third surface 221. The processor 120 may be configured to identify a change in a magnetic field related to a digitizer panel included in the flexible display 160. The processor 120 may be configured to detect a release of the folded state based on the identified change in the magnetic field.

According to an embodiment, the foldable electronic device 101 may further include a camera 180 disposed in at least one of the first housing structure 210 and the second housing structure 220. According to an embodiment, the processor 120 may be configured to capture at least one image using the camera 180 in response to a release of the folded state. Based on at least one captured image, the processor 120 may be configured to identify a first region corresponding to the flexible display 160 and a second region corresponding to a remaining area other than the first region, within the entire area of the at least one captured image. The processor 120 may be configured to identify a ratio value based on the first region and the second region. The processor 120 may be configured to identify an angle formed between the first housing structure 210 and the second housing structure 220 based on the identified ratio value.

According to an embodiment, the processor 120 may be configured to identify a boundary line of the flexible display 160 included in the at least one image. The processor 120 may be configured to identify the first region corresponding to the flexible display 160 and the second region corresponding to the remaining region other than the first region based on the identified boundary line.

According to an embodiment, the processor 120 may be configured to identify a first length corresponding to the first region and a second length corresponding to the second region, within the total length corresponding to one surface of the at least one image. The processor 120 may be configured to identify a length ratio value based on the first length and the second length. The processor 120 may be configured to identify the angle formed between the first housing structure 210 and the second housing structure 220 based on the identified length ratio value.

According to an embodiment, the processor 120 may be configured to identify a first area corresponding to the first region and a second area corresponding to the second region, within the total area corresponding to the at least one image. The processor 120 may be configured to identify an area ratio value based on the first area and the second area. The processor 120 may be configured to identify the angle formed between the first housing structure 210 and the second housing structure 220 based on the identified area ratio value.

According to an embodiment, the processor 120 may be configured to adjust an audio configuration value related to the audio input module 511 and the audio output module 512, or adjust a display configuration value related to the flexible display 160, based on the identified angle.

According to an embodiment, when the identified time difference value exceeds a configured threshold, the processor 120 may be configured to capture at least one image using the camera 180. The processor 120 may be configured to identify the angle formed between the first housing structure 210 and the second housing structure 220 based on the at least one captured image.

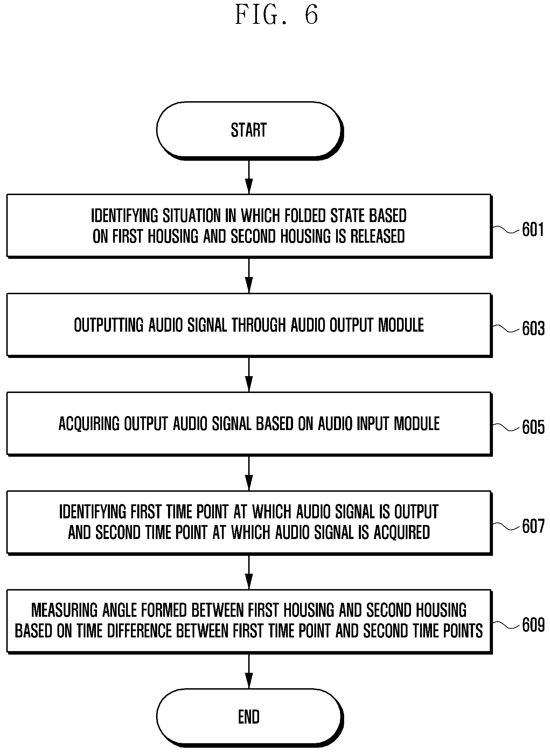

FIG. 6 is a flowchart illustrating a method of identifying an angle formed between a first housing and a second housing based on an audio signal according to an embodiment of the disclosure.

In the following embodiments, individual operations may be performed sequentially, but are not necessarily performed sequentially. For example, the order of individual operations may be changed, and at least two operations may be performed in parallel.

According to an embodiment, operations 601 to 609 may be understood to be performed by a processor (e.g., the processor 120 in FIGS. 1 and 5) of an electronic device (e.g., the electronic device 101 in FIGS. 1 to 5).

The electronic device 101 of FIG. 6 (e.g., the electronic device 101 of FIGS. 1 and 5) may be at least partially similar to the electronic device 200 of FIGS. 2A and 2B, or may further include other embodiments of the electronic device. The electronic device 101 may include a foldable electronic device including a plurality of housings (e.g., a first housing 210 and a second housing 220 in FIG. 2A).

According to an embodiment, the electronic device 101 may include a foldable electronic device including a first housing 210, a hinge module (e.g., the hinge module 320 of FIG. 3) connected to one end of the first housing 210, and a second housing 220 foldably connected to the first housing 210 via the hinge module 320. For example, the hinge module 320 may be disposed between the first housing 210 and the second housing 220, and may be structurally coupled to the first housing 210 and the second housing 220.

According to an embodiment, the electronic device 101 may operate in a folded state in which the first housing 210 and the second housing 220 are disposed to face each other around a hinge module 320, or may operate in an unfolded state in which the front surface (e.g., the first surface 211 in FIG. 2A) of the first housing 210 and the front surface (e.g., the third surface 221 in FIG. 2A) of the second housing 220 are oriented in the same direction (e.g., a state in which an angle formed between the first housing 210 and the second housing 220, such as an opening/closing angle, is about 180 degrees). For example, when the folded state is released and the angle formed between the first housing 210 and the second housing 220 falls within a predetermined range (e.g., from about 1 degree to less than about 180 degrees), the electronic device 101 may operate in an intermediate state.

According to an embodiment, the electronic device 101 may include at least one microphone (e.g., the audio input module 511 of FIG. 5) and at least one speaker (e.g., the audio output module 512 of FIG. 5). For example, the electronic device 101 may output an audio signal using the at least one speaker and may acquire (e.g., input) the output audio signal using the at least one microphone. According to an embodiment, the electronic device 101 may identify an angle formed between the first housing 210 and the second housing 220 based on a time difference between a time point at which the audio signal is output and a time point at which the audio signal is input.

In operation 601, the processor 120 (e.g., the processor 120 of FIG. 5) of the electronic device 101 may identify a situation in which a folded state based on the first housing 210 and the second housing 220 is released. For example, the folded state may refer to a state of the electronic device 101 in which the front surface 211 of the first housing 210 and the front surface 221 of the second housing 220 are disposed to face each other. For example, the processor 120 may detect a change in an electromagnetic field based on a digitizer included in the display module (e.g., the display module 160 of FIG. 5), and may determine that the electronic device 101 has been released from the folded state based on the change in the electromagnetic field occurring in the situation in which the folded state is released. For example, the situation in which the folded state is released may include a case in which the electronic device 101 transitions from the folded state to an intermediate state. According to an embodiment, the electronic device 101 is not limited to a specific method for detecting the release of the folded state, and may detect the release using various methods (e.g., various types of sensor modules). For example, the electronic device 101 may detect whether the folded state has been released using at least one of a digitizer of the display module 160, a Hall IC, a magnetic member, an accelerometer, a gyro sensor, a geomagnetic sensor, a contact switch, an ambient light sensor, a proximity sensor, and/or a touch sensor.

In operation 603, the processor 120 may output an audio signal via the audio output module 512 (e.g., a speaker) in response to the release of the folded state. For example, the processor 120 may generate an audio signal and may output the generated audio signal in a configured direction. The processor 120 may identify a first time point at which the audio signal is output.

In operation 605, the processor 120 may acquire the output audio signal based on the audio input module 511. For example, the processor 120 may acquire at least a portion of the output audio signal using at least one audio input module 511 (e.g., a first microphone or a second microphone). The processor 120 may identify a second time point at which the audio signal is acquired.

In operation 607, the processor 120 may identify a first time point at which the audio signal is output and a second time point at which the audio signal is acquired. According to an embodiment, as the physical distance between the audio output module 512 and the audio input module 511 increases, the acquisition of the audio signal may be relatively delayed. For example, in a state in which the audio output module 512 and the first microphone are separated by a first distance, and the audio output module 512 and the second microphone are separated by a second distance, the first distance may be shorter than the second distance. In this case, a (2-1)^{th} time point at which the audio signal is acquired using the first microphone may occur relatively earlier than a (2-2)^{th} time point at which the audio signal is acquired using the second microphone. For example, a first time interval between the first time point and the (2-1)^{th} time point may be shorter than a second time interval between the first time point and the (2-2)^{th} time point. According to an embodiment, in a situation in which the electronic device 101 transitions from the folded state to the intermediate state or the unfolded state, a first distance (e.g., a distance between the audio output module 512 and the first microphone) and a second distance (e.g., a distance between the audio output module 512 and the second microphone) may be at least partially increased, and the second time point at which the audio signal is acquired may also be at least partially delayed.

In operation 609, the processor 120 may measure the angle formed between the first housing 210 and the second housing 220 based on a time difference between the first time point and the second time point (e.g., the (2-1)^{th} time point or the (2-2)^{th} time point). According to an embodiment, the processor 120 may identify the angle corresponding to the time difference based on angle-related information (e.g., the angle-related information 520 of FIG. 5) stored in the memory 130. According to an embodiment, the electronic device 101 may identify the angle formed between the first housing 210 and the second housing 220 based on the time point at which the audio signal is output and the time point at which the audio signal is input.

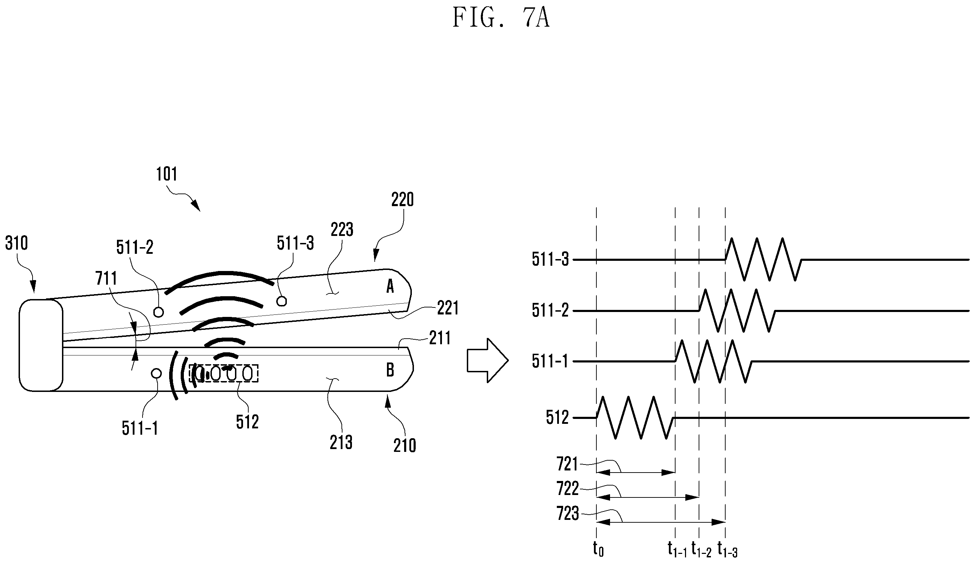

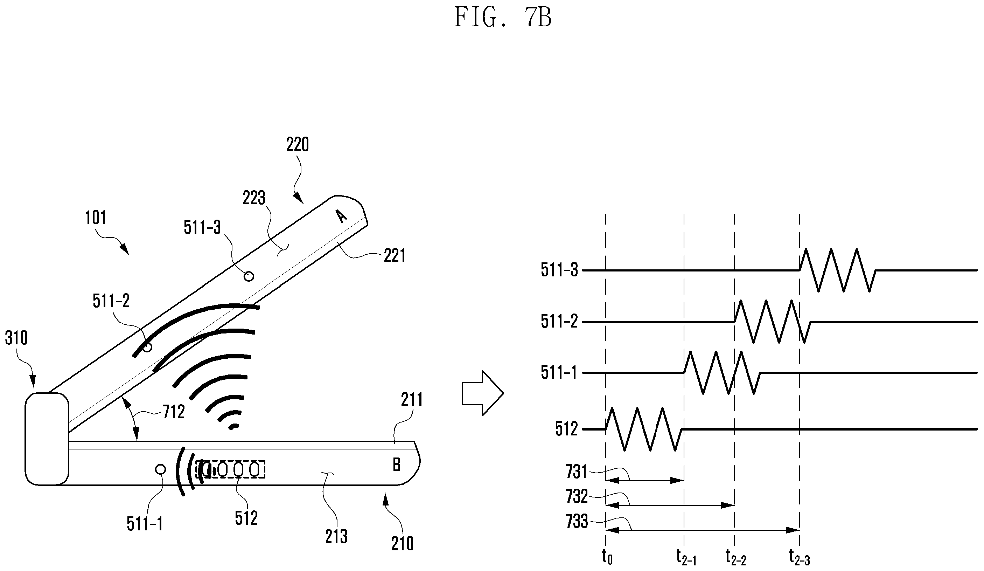

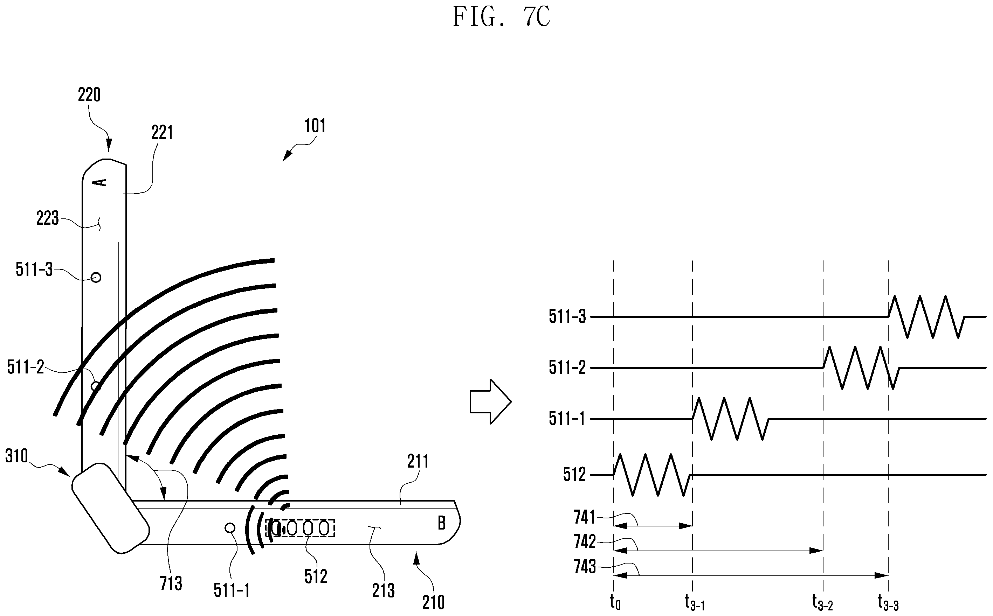

FIG. 7A is a view illustrating a first exemplary method of identifying an angle based on an audio signal according to an embodiment of the disclosure. FIG. 7B is a view illustrating a second exemplary method of identifying an angle based on an audio signal according to an embodiment of the disclosure. FIG. 7C is a view illustrating a third exemplary method of identifying an angle based on an audio signal according to an embodiment of the disclosure.

The electronic device 101 illustrated in FIGS. 7A, 7B, and 7C (e.g., the electronic device 101 of FIGS. 1 and 5) may be at least partially similar to the electronic device 200 of FIGS. 2A and 2B, or may further include other embodiments of the electronic device. The electronic device 101 may include a foldable electronic device including a plurality of housings (e.g., a first housing 210 and a second housing 220 in FIG. 2A).

According to an embodiment, the electronic device 101 may include a foldable electronic device including a first housing 210, a hinge module (e.g., the hinge module 320 of FIG. 3) connected to one end of the first housing 210, and a second housing 220 foldably connected to the first housing 210 via the hinge module 320. For example, the hinge module 320 may be disposed between the first housing 210 and the second housing 220, and may be structurally coupled to the first housing 210 and the second housing 220.

Referring to FIGS. 7A, 7B, and 7C, the electronic device 101 is illustrated in a situation in which the folded state is released from a state in which the front surface (e.g., the first surface 211 of FIG. 2A) of the first housing 210 and the front surface (e.g., the third surface 221 of FIG. 2A) of the second housing 220 are disposed to face each other about the hinge module 320. The electronic device 101 may include at least one audio output module (e.g., the audio output module 512 of FIG. 5) and at least one audio input module (e.g., the audio input module 511 of FIG. 5). In FIGS. 7A, 7B, and 7C, the electronic device 101 is illustrated as including one audio output module 512 and three audio input modules 511-1, 511-2, and 511-3, but is not limited thereto.

Referring to FIGS. 7A, 7B, and 7C, the electronic device 101 may include one audio output module 512 (e.g., a first audio output module 512 (a speaker)) and one audio input module (e.g., a first audio input module 511-1 (a first microphone)), based on a first side surface member (e.g., the first side surface member 213 of FIG. 2A) of the first housing 210. The electronic device 101 may include two audio input modules (e.g., a second audio input module 511-2 (a second microphone), and a third audio input module 511-3 (a third microphone)), based on a second side surface member (e.g., the second side surface member 223 of FIG. 2A) of the second housing 220. According to an embodiment, when an audio signal (e.g., a sound or voice signal) is output via the audio output module 512, the electronic device 101 may acquire at least a portion of the output audio signal based on the three audio input modules 511-1, 511-2, and 511-3. The time points at which the audio signal is acquired by the three respective audio input modules 511-1, 511-2, and 511-3 may differ from one another. For example, the audio output module 512 and the audio input modules 511-1, 511-2, and 511-3 may be disposed at different distances from each other. For example, as the distance between the audio output module 512 and each of the audio input modules 511-1, 511-2, and 511-3 increases, the time point at which the audio signal is acquired may be relatively delayed.

Referring to FIG. 7A, in the situation in which the folded state is released, the electronic device 101 may be in a state in which a first angle 711 is formed between the first housing 210 and the second housing 220. According to an embodiment, the electronic device 101 may output an audio signal via the audio output module 512 in response to the release of the folded state, and may acquire the output audio signal based on at least one of the audio input modules 511-1, 511-2, and 511-3. The electronic device 101 may identify the first angle 711 based on a time difference between a time point at which the audio signal is output and a time point at which the audio signal is acquired.

Referring to FIG. 7A, a graph is illustrated in which a time point t₀ at which an audio signal is output via the first audio output module 512, a (1-1)^{th} time point t₁₋₁ at which the audio signal is acquired based on the first audio input module 511-1, a (1-2)^{th} time point t₁₋₂ at which the audio signal is acquired based on the second audio input module 511-2, and a (1-3)^{th} time point t₁₋₃ at which the audio signal is acquired based on the third audio input module 511-3 are represented.

Referring to FIG. 7A, when the audio signal output via the first audio output module 512 is input via the first audio input module 511-1, a (1-1)^{th} time 721 may elapse. When the audio signal output via the first audio output module 512 is input via the second audio input module 511-2, a (1-2)^{th} time 722 may elapse. When the audio signal output via the first audio output module 512 is input via the third audio input module 511-3, a (1-3)^{th} time 723 may elapse. According to an embodiment, the electronic device 101 may identify a first angle 711 between the first housing 210 and the second housing 220 based on the (1-1)^{th} time 721, the (1-2)^{th} time 722, and the (1-3)^{th} time 723. For example, the processor (e.g., the processor 120 of FIG. 5) of the electronic device 101 may identify the first angle 711 based on angle-related information 520 stored in the memory (e.g., the memory 130 of FIG. 5). The angle-related information 520 may include data in the form of a table in which time difference values related to the output and acquisition of the audio signal are associated with corresponding angle values. For example, the processor 120 may identify a time difference value related to at least one audio output module 512 and at least one audio input module 511-1, 511-2, or 511-3 based on the angle-related information 520, and may identify the first angle 711 corresponding to the identified time difference value.

Referring to FIG. 7B, in the situation in which the folded state is released, the electronic device 101 may be in a state in which a second angle 712 is formed between the first housing 210 and the second housing 220. Referring to FIG. 7B, a graph is illustrated in which a time point t₀ at which an audio signal is output via the first audio output module 512, a (2-1)^{th} time point t₂₋₁ at which the audio signal is acquired based on the first audio input module 511-1, a (2-2)^{th} time point t₂₋₂ at which the audio signal is acquired based on the second audio input module 511-2, and a (2-3)^{th} time point t₂₋₃ at which the audio signal is acquired based on the third audio input module 511-3 are represented. Referring to FIG. 7B, when the audio signal output via the first audio output module 512 is input via the first audio input module 511-1, a (2-1)^{th} time 731 may elapse. When the audio signal output via the first audio output module 512 is input via the second audio input module 511-2, a (2-2)^{th} time 732 may elapse. When the audio signal output via the first audio output module 512 is input via the third audio input module 511-3, a (2-3)^{th} time 733 may elapse. According to an embodiment, the electronic device 101 may identify a second angle 712 between the first housing 210 and the second housing 220 based on the (2-1)^{th} time 731, the (2-2)^{th} time 732, and the (2-3)^{th} time 733. For example, the processor 120 of the electronic device 101 may identify the second angle 712 based on angle-related information 520 stored in the memory 130. The processor 120 may identify a time difference value related to at least one audio output module 512 and at least one audio input module 511-1, 511-2, or 511-3 based on the angle-related information 520, and may identify the second angle 712 corresponding to the identified time difference value. For example, the second angle 712 may be about 45 degrees.

Referring to FIG. 7C, in the situation in which the folded state is released, the electronic device 101 may be in a state in which a third angle 713 is formed between the first housing 210 and the second housing 220. Referring to FIG. 7C, a graph is illustrated in which a time point t₀ at which an audio signal is output via the first audio output module 512, a (3-1)^{th} time point t₃₋₁ at which the audio signal is acquired based on the first audio input module 511-1, a (3-2)^{th} time point t₃₋₂ at which the audio signal is acquired based on the second audio input module 511-2, and a (3-3)^{th} time point t₃₋₃ at which the audio signal is acquired based on the third audio input module 511-3 are represented. Referring to FIG. 7C, when the audio signal output via the first audio output module 512 is input via the first audio input module 511-1, a (3-1)^{th} time 741 may elapse. When the audio signal output via the first audio output module 512 is input via the second audio input module 511-2, a (3-2)^{th} time 742 may elapse. When the audio signal output via the first audio output module 512 is input via the third audio input module 511-3, a (3-3)^{th} time 743 may elapse. According to an embodiment, the electronic device 101 may identify a third angle 713 between the first housing 210 and the second housing 220 based on the (3-1)^{th} time 741, the (3-2)^{th} time 742, and the (3-3)^{th} time 743. For example, the processor 120 of the electronic device 101 may identify the third angle 713 based on angle-related information 520 stored in the memory 130. The processor 120 may identify a time difference value related to at least one audio output module 512 and at least one audio input module 511-1, 511-2, or 511-3 based on the angle-related information 520, and may identify the third angle 713 corresponding to the identified time difference value. For example, the third angle 713 may be about 90 degrees.

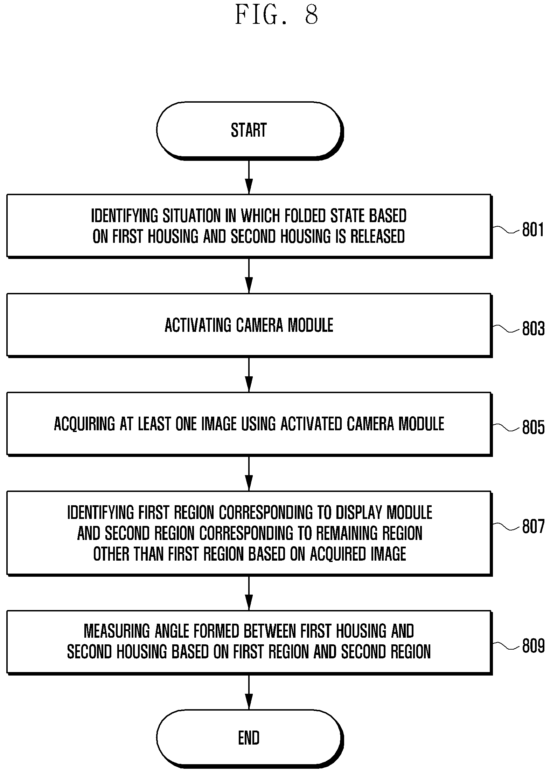

FIG. 8 is a flowchart illustrating a method of identifying an angle formed between a first housing and a second housing based on a captured image according to an embodiment of the disclosure.

In the following embodiments, individual operations may be performed sequentially, but are not necessarily performed sequentially. For example, the order of individual operations may be changed, and at least two operations may be performed in parallel.

According to an embodiment, operations 801 to 809 may be understood to be performed by a processor (e.g., the processor 120 in FIGS. 1 and 5) of an electronic device (e.g., the electronic device 101 in FIGS. 1 to 5).

The electronic device 101 of FIG. 8 (e.g., the electronic device 101 of FIGS. 1 and 5) may be at least partially similar to the electronic device 200 of FIGS. 2A and 2B, or may further include other embodiments of the electronic device. The electronic device 101 may include a foldable electronic device including a plurality of housings (e.g., a first housing 210 and a second housing 220 in FIG. 2A).

According to an embodiment, the electronic device 101 may include a foldable electronic device including a first housing 210, a hinge module (e.g., the hinge module 320 of FIG. 3) connected to one end of the first housing 210, and a second housing 220 foldably connected to the first housing 210 via the hinge module 320. For example, the hinge module 320 may be disposed between the first housing 210 and the second housing 220, and may be structurally coupled to the first housing 210 and the second housing 220.

According to an embodiment, the electronic device 101 may operate in a folded state in which the first housing 210 and the second housing 220 are disposed to face each other around a hinge module 320, or may operate in an unfolded state in which the front surface (e.g., the first surface 211 in FIG. 2A) of the first housing 210 and the front surface (e.g., the third surface 221 in FIG. 2A) of the second housing 220 are oriented in the same direction (e.g., a state in which an angle formed between the first housing 210 and the second housing 220, such as an opening/closing angle, is about 180 degrees). For example, when the folded state is released and the angle formed between the first housing 210 and the second housing 220 falls within a predetermined range (e.g., from about 1 degree to less than about 180 degrees), the electronic device 101 may operate in an intermediate state.

According to an embodiment, the electronic device 101 may include at least one camera module (e.g., the camera module 180 of FIG. 5). For example, the at least one camera module 180 may be disposed adjacent to the front surface (e.g., the first surface 211 of FIG. 2A) of the first housing 210 or the front surface (e.g., the third surface 221 of FIG. 2A) of the second housing 220. For example, in the folded state of the electronic device 101, the camera module 180 may capture an image of a housing (e.g., the second housing 220) located on opposite to the housing (e.g., the first housing 210) in which the camera module 180 is disposed. For example, the electronic device 101 may capture at least one image using at least one camera 180, and may distinguish and recognize a partial region of the electronic device 101 included in the captured image (e.g., a partial region of the display module 160) and a background region. According to an embodiment, the electronic device 101 may distinguish and recognize a first region corresponding to the display module 160 included in the electronic device 101 and a second region corresponding to an external environment (e.g., background) based on the captured image, and may identify an angle formed between the first housing 210 and the second housing 220 based on a ratio between the first region and the second region.

In operation 801, the processor 120 (e.g., the processor 120 of FIG. 5) of the electronic device 101 may identify a situation in which a folded state based on the first housing 210 and the second housing 220 is released. For example, the folded state may refer to a state of the electronic device 101 in which the front surface 211 of the first housing 210 and the front surface 221 of the second housing 220 are disposed to face each other. For example, the processor 120 may detect a change in an electromagnetic field based on a digitizer included in the display module 160, and may determine that the electronic device 101 has been released from the folded state based on the change in the electromagnetic field occurring in the situation in which the folded state is released. For example, the situation in which the folded state is released may include a case in which the electronic device 101 transitions from the folded state to an intermediate state.

In operation 803, the processor 120 may activate the camera module 180 in response to a release of the folded state. For example, the processor 120 may supply power to the camera module 180 to capture an image corresponding to an external environment. The processor 120 may capture at least one image using the activated camera module 180. According to an embodiment, the camera module 180 may be at least partially disposed under the display panel included in the display module 160, and may be disposed in an inner space of the first housing 210 and the second housing 220. When the electronic device 101 is in the folded state and the camera module 180 is disposed in the first housing 210, the camera module 180 may capture at least a portion of the second housing 220 that faces the first housing 210. When the electronic device 101 is in the folded state and the camera module 180 is disposed in the second housing 220, the camera module 180 may capture at least a partial region of the first housing 210 that faces the second housing 220.

In operation 805, the processor 120 may acquire at least one image using the activated camera module 180. For example, after the camera module 180 is activated, the processor 120 may capture at least one image using the camera module 180 when a configured time elapses. According to an embodiment, the processor 120 may capture at least one image using the camera module 180 when a configured time elapses after the camera module 180 is activated and the movement of the first housing 210 and the second housing 220 is fixed. According to an embodiment, after the folded state is released, the electronic device 101 may capture at least one image using the camera module 180 while the first housing 210 and the second housing 220 are spread at a specific angle. For example, when the electronic device 101 is released from the folded state, the electronic device 101 may operate in the intermediate state. When the electronic device 101 is in the intermediate state and the angle between the first housing 210 and the second housing 220 falls within a configured angle range (e.g., about 10 degrees to about 60 degrees), the camera module 180 may capture an image including a first region corresponding to the display module 160. In operation 805, when the angle between the first housing 210 and the second housing 220 falls within the configured angle range, the electronic device 101 may acquire at least one image using the camera module 180.

In operation 807, the processor 120 may identify a first region corresponding to the display module 160 and a second region corresponding to the remaining region other than the first region based on the acquired image. For example, the first region may include a region occupied by the display module 160 within the entire region of the acquired image, and the second region may include the remaining region (e.g., a background region) excluding the first region from the entire region of the acquired image. The acquired image may be divided into the first region and the second region.

In operation 809, the processor 120 may measure the angle formed between the first housing 210 and the second housing 220 based on the first region and the second region. According to an embodiment, the processor 120 may identify an angle corresponding to a ratio between the first region and the second region based on angle-related information (e.g., the angle-related information 520 of FIG. 5) stored in the memory 130. According to an embodiment, the electronic device 101 may distinguish the first region and the second region based on the acquired image, and may identify the angle formed between the first housing 210 and the second housing 220 based on the ratio between the first region and the second region.

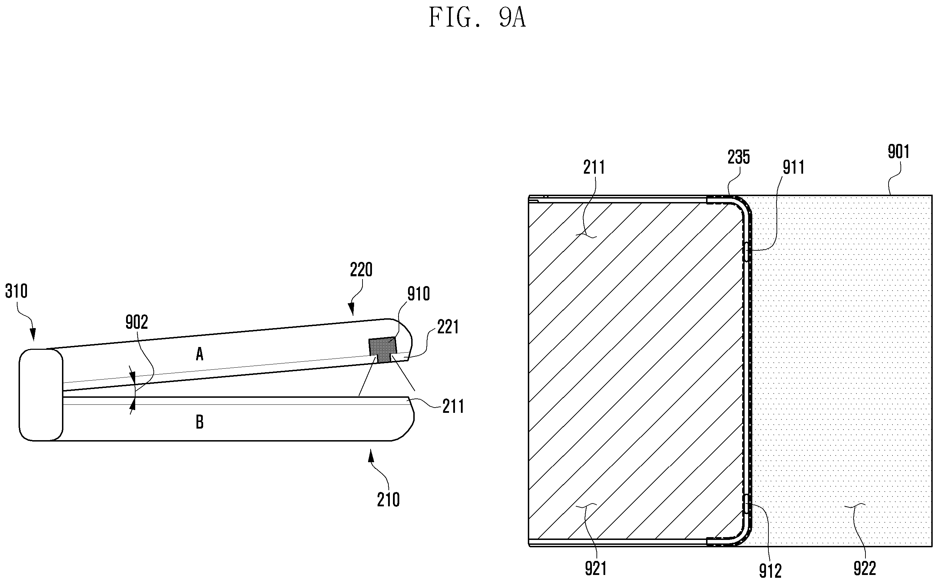

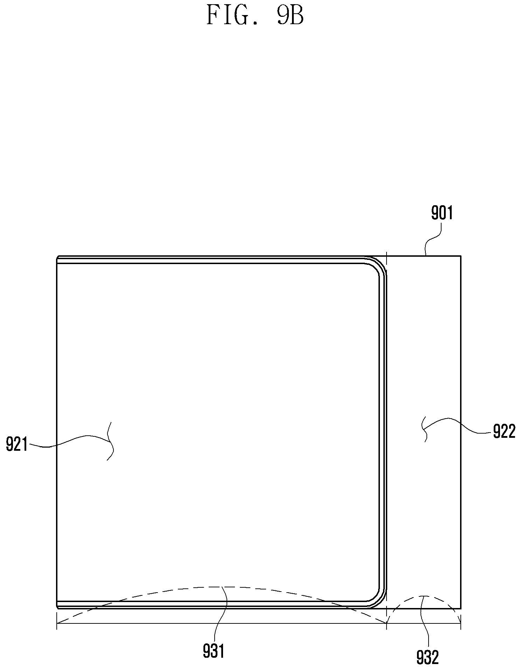

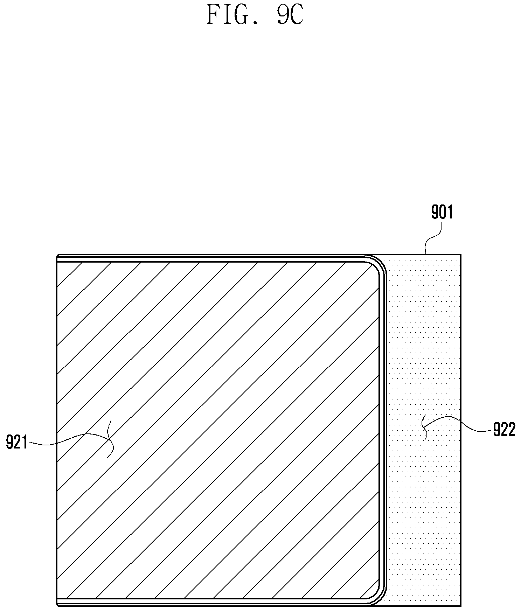

FIG. 9A is a view illustrating an exemplary method of identifying an angle based on a captured image according to an embodiment of the disclosure. FIG. 9B is a view illustrating an example of identifying an angle based on a length ratio of a display corresponding to one surface of a captured image according to an embodiment of the disclosure. FIG. 9C is a view illustrating an example of identifying an angle based on an area ratio of a display within a total area of a captured image according to an embodiment of the disclosure.

The electronic device 101 of FIGS. 9A, 9B, and 9C (e.g., the electronic device 101 of FIGS. 1 and 5) may be at least partially similar to the electronic device 200 of FIGS. 2A and 2B, or may include other embodiments of the electronic device. The electronic device 101 may include a foldable electronic device including a plurality of housings (e.g., a first housing 210 and a second housing 220 in FIG. 2A).

According to an embodiment, the electronic device 101 may include a foldable electronic device including a first housing 210, a hinge module (e.g., the hinge module 320 of FIG. 3) connected to one end of the first housing 210, and a second housing 220 foldably connected to the first housing 210 via the hinge module 320. For example, the hinge module 320 may be disposed between the first housing 210 and the second housing 220, and may be structurally coupled to the first housing 210 and the second housing 220.

Referring to FIGS. 9A, the electronic device 101 is illustrated in a situation in which the folded state is released from a state in which the front surface (e.g., the first surface 211 of FIG. 2A) of the first housing 210 and the front surface (e.g., the third surface 221 of FIG. 2A) of the second housing 220 are disposed to face each other about the hinge module 320. Referring to FIG. 9A, the electronic device 101 may include a camera module 910 (e.g., the camera module 180 of FIG. 5) disposed in an inner space of the second housing 220. In FIG. 9A, the electronic device 101 is illustrated as including one camera module 910 disposed in the second housing 220, but is not limited thereto. For example, the camera module 910 may include a plurality of camera modules and may be at least partially disposed in the first housing 210.

Referring to FIG. 9A, the camera module 910 disposed in the second housing 220 of the electronic device 101 may capture at least one image directed toward the first housing 210 located on the opposite side in the folded state. According to an embodiment, the processor (e.g., the processor 120 of FIG. 5) of the electronic device 101 may activate the camera module 910 in response to a release of the folded state, and may capture a first image 901 using the activated camera module 910. For example, the first image 901 may be divided into a first region 921 corresponding to the front surface 211 of the first housing 210 and a second region 922 corresponding to the remaining region other than the first region 921.

According to an embodiment, the processor 120 may recognize a protective frame (e.g., the first protective frame 235 of FIG. 4A) coupled to the first housing 210 based on the acquired first image 901, and may distinguish and recognize a first region 921 (e.g., a region corresponding to the display module 160) located inside the protective frame 235 and a second region 922 (e.g., a region corresponding to an external environment such as a background) located outside the protective frame 235. The first image 901 may be divided into the first region 921 and the second region 922. According to an embodiment, the processor 120 may identify at least one buffer member 911 or 912 (e.g., a shock absorbing member) at least partially coupled to the protective frame 235, and may divide the first image 901 into the first region 921 and the second region 922 based on a reference line formed based on the at least one buffer member 911 or 912. According to an embodiment, the electronic device 101 may identify a ratio value of the first region 921 and the second region 922 within the entire region of the image 901, and may identify a first angle 902 formed between the first housing 210 and the second housing 220 based on the ratio value.

Referring to FIG. 9B, the first image 901 may be divided into a first region 921 (e.g., a region corresponding to the display module 160) and a second region 922 (e.g., a region corresponding to the background). The processor 120 may identify a first distance 931 corresponding to the first region 921 and a second distance 932 corresponding to the second region 922 based on one surface (e.g., the horizontal surface) of the first image 901, and may determine a ratio value between the first distance 931 and the second distance 932. According to an embodiment, the processor 120 may identify an angle formed between the first housing 210 and the second housing 220 based on the ratio value between the first distance 931 and the second distance 932.

Referring to FIG. 9C, the first image 901 may be divided into a first region 921 (e.g., a region corresponding to the display module 160) and a second region 922 (e.g., a region corresponding to the background). The processor 120 may identify a first area corresponding to the first region 921 and a second area corresponding to the second region 922 based on the total area of the first image 901, and may determine a ratio value between the first area and the second area. According to an embodiment, the processor 120 may identify an angle formed between the first housing 210 and the second housing 220 based on the ratio value between the first area and the second area.

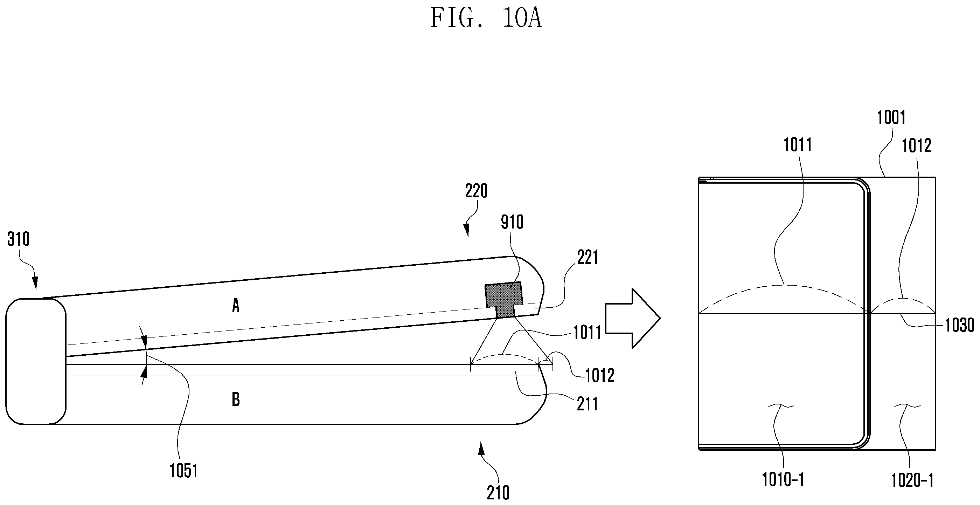

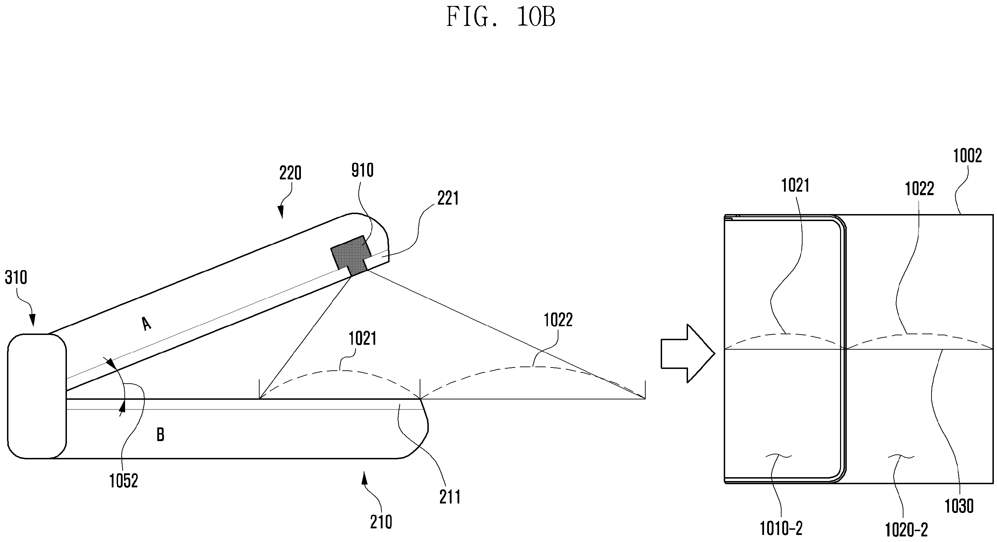

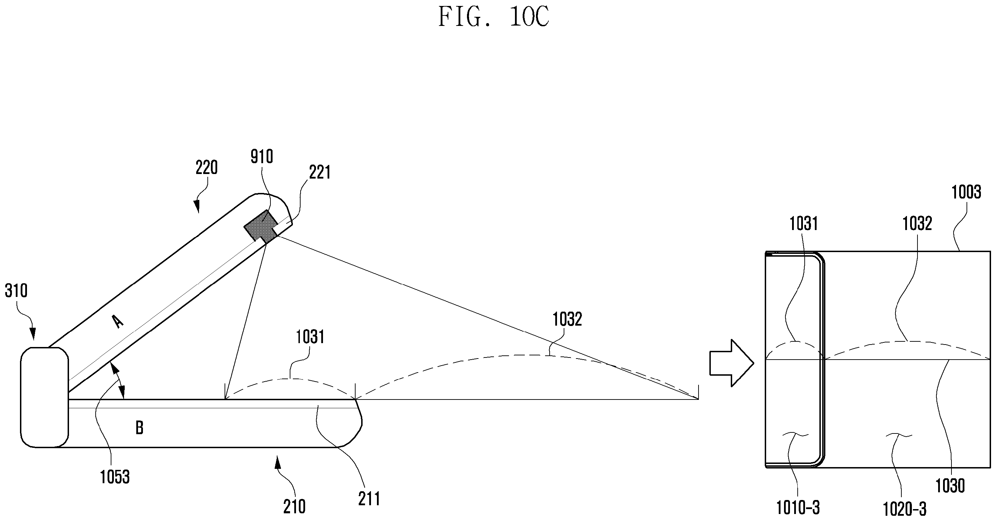

FIG. 10A is a view illustrating a first exemplary method of identifying an angle based on a captured image according to an embodiment of the disclosure. FIG. 10B is a view illustrating a second exemplary method of identifying an angle based on a captured image according to an embodiment of the disclosure. FIG. 10C is a view illustrating a third exemplary method of identifying an angle based on a captured image according to an embodiment of the disclosure.

The electronic device 101 of FIGS. 10A, 10B, and 10C (e.g., the electronic device 101 of FIGS. 1 and 5) may be at least partially similar to the electronic device 200 of FIGS. 2A and 2B or may include other embodiments of the electronic device. The electronic device 101 may include a foldable electronic device including a plurality of housings (e.g., a first housing 210 and a second housing 220 in FIG. 2A).

According to an embodiment, the electronic device 101 may include a foldable electronic device including a first housing 210, a hinge module (e.g., the hinge module 320 of FIG. 2B) connected to one end of the first housing 210, and a second housing 220 foldably connected to the first housing 210 via the hinge module 320. For example, the hinge module 320 may be disposed between the first housing 210 and the second housing 220, and may be structurally coupled to the first housing 210 and the second housing 220.

Referring to FIGS. 10A, 10B, and 10C, the electronic device 101 is illustrates in a situation in which the folded state is released from a state in which the front surface (e.g., the first surface 211 of FIG. 2A) of the first housing 210 and the front surface (e.g., the third surface 221 of FIG. 2A) of the second housing 220 are disposed to face each other about the hinge module 320. Referring to FIG. 10A, the electronic device 101 may include a camera module 910 (e.g., the camera module 180 of FIG. 5) disposed in an inner space of the second housing 220.

Referring to FIG. 10A, the camera module 910 disposed in the second housing 220 of the electronic device 101 may capture at least one image directed toward the front surface 211 of the first housing 210 located on the opposite side in the folded state. According to an embodiment, the processor (e.g., the processor 120 of FIG. 5) of the electronic device 101 may activate the camera module 910 in response to a release of the folded state, and may capture a first image 1001 using the activated camera module 910. For example, the first image 1001 may be divided into a (1-1)^{th} region 1010-1 corresponding to the front surface 211 of the first housing 210 and a (2-1)^{th} region 1020-1 corresponding to the remaining region other than the (1-1)^{th} region 1010-1.

Referring to FIG. 10A, the first image 1001 may be divided into a (1-1)^{th} region 1010-1 (e.g., a region corresponding to the display module 160) and a (2-1)^{th} region 1020-1 (e.g., a region corresponding to the background). The processor 120 may identify a (1-1)^{th} distance 1011 corresponding to the (1-1)^{th} region 1010-1 and a (2-1)^{th} distance 1012 corresponding to the (2-1)^{th} region 1020-1 based on a line 1030 extending across the first image 1001 in one direction (e.g., a horizontal direction), and may determine a ratio value between the (1-1)^{th} distance 1011 and the (2-1)^{th} distance 1012. According to an embodiment, the processor 120 may identify a first angle 1051 formed between the first housing 210 and the second housing 220 based on the ratio value between the (1-1)^{th} distance 1011 and the (2-1)^{th} distance 1012.

Referring to FIG. 10B, the second image 1002 may be divided into a (1-2)^{th} region 1010-2 (e.g., a region corresponding to the display module 160) and a (2-2)^{th} region 1020-2 (e.g., a region corresponding to the background). The processor 120 may identify a (1-2)^{th} distance 1021 corresponding to the (1-2)^{th} region 1010-1 and a (2-2)^{th} distance 1022 corresponding to the (2-2)^{th} region 1020-2 based on a line 1030 extending across the second image 1002 in one direction (e.g., a horizontal direction), and may determine a ratio value between the (1-2)^{th} distance 1021 and the (2-2)^{th} distance 1022. According to an embodiment, the processor 120 may identify a second angle 1052 formed between the first housing 210 and the second housing 220 based on the ratio value between the (1-2)^{th} distance 1021 and the (2-2)^{th} distance 1022.

Referring to FIG. 10C, the third image 1003 may be divided into a (1-3)^{th} region 1010-3(e.g., a region corresponding to the display module 160) and a (2-3)^{th} region 1020-3 (e.g., a region corresponding to the background). The processor 120 may identify a (1-3)^{th} distance 1031 corresponding to the (1-3)^{th} region 1010-3 and a (2-3)^{th} distance 1032 corresponding to the (2-3)^{th} region 1020-3 based on a line 1030 extending across the third image 1003 in one direction (e.g., a horizontal direction), and may determine a ratio value between the (1-3)^{th} distance 1031 and the (2-3)^{th} distance 1032. According to an embodiment, the processor 120 may identify a third angle 1053 formed between the first housing 210 and the second housing 220 based on the ratio value between the (1-3)^{th} distance 1031 and the (2-3)^{th} distance 1032.

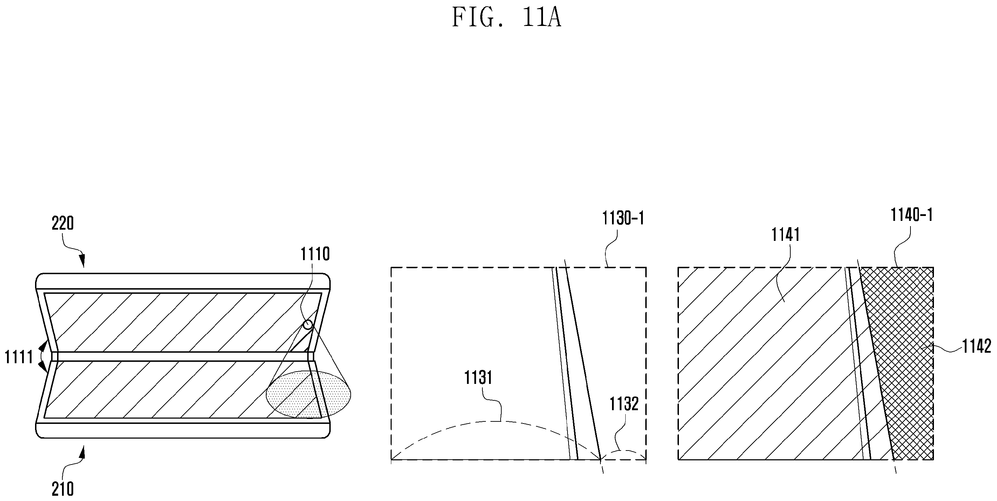

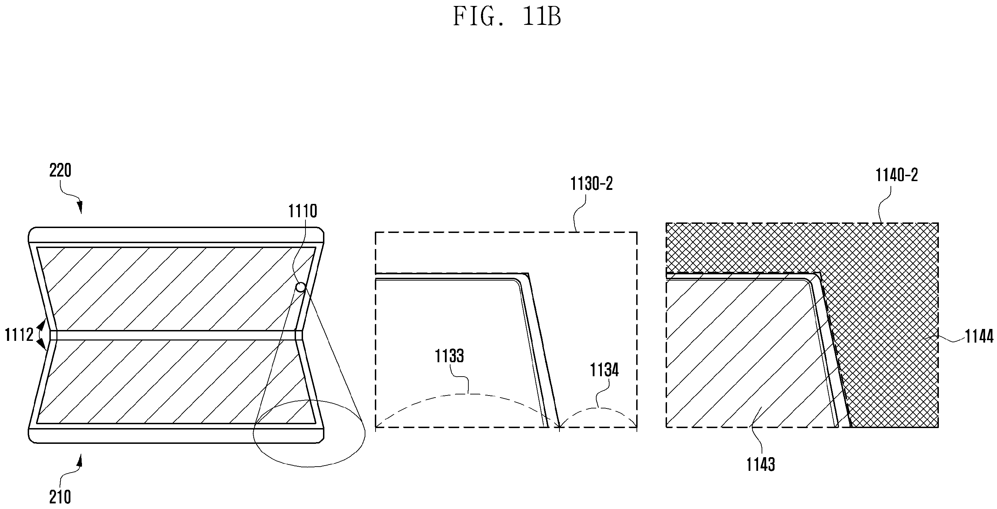

FIG. 11A is a view illustrating a first exemplary method of identifying an angle based on an image captured using a camera disposed at a different position, according to an embodiment of the disclosure. FIG. 11B is a second exemplary view illustrating a method of identifying an angle based on an image captured using a camera disposed at a different position according to an embodiment of the disclosure.

The electronic device 101 of FIGS. 11A and 11B (e.g., the electronic device 101 of FIGS. 1 and 5) may be at least partially similar to the electronic device 200 of FIGS. 2A and 2B or may include other embodiments of the electronic device. The electronic device 101 may include a foldable electronic device including a plurality of housings (e.g., the first housing 210 and the second housing 220 in FIG. 2A).

Referring to FIGS. 11A and 11B, the electronic device 101 may include a camera module 1110 (e.g., the camera module 180 of FIG. 5) disposed in an inner space of the second housing 220. For example, the camera module 1110 may be disposed under the display module (e.g., the display module 160 of FIG. 5). Referring to FIG. 11A, the camera module 1110 may capture at least one image toward the front surface 211 of the first housing 210 located on the opposite side in the folded state. For example, the captured image may be divided into a first region corresponding to the display module 160 and a second region corresponding to the background. According to an embodiment, the position where the camera module 1110 is disposed is not limited to a specific location.

Referring to FIG. 11A, the processor (e.g., the processor 120 of FIG. 5) of the electronic device 101 may activate the camera module 1110 in response to the release of the folded state, and may capture a (1-1)^{th} image 1130-1 using the activated camera module 1110. For example, the (1-1)^{th} image 1130-1 may be divided into a (1-1)^{th} distance 1131 corresponding to the front surface 211 of the first housing 210 and a (1-2)^{th} distance 1132 corresponding to the remaining distance other than the (1-1)^{th} distance 1131, within the total distance corresponding to one surface. According to an embodiment, the processor 120 may identify a ratio value between the (1-1)^{th} distance 1131 and the (1-2)^{th} distance 1132 based on the (1-1)^{th} image 1130-1, and may identify a first angle 1111 corresponding to the ratio value. The processor 120 may identify the first angle 1111 formed between the first housing 210 and the second housing 220 of the electronic device 101 based on the distance ratio of the (1-1)^{th} image 1130-1.

Referring to FIG. 11A, the processor 120 of the electronic device 101 may activate the camera module 1110 in response to the release of the folded state, and may capture a (1-2)^{th} image 1140-1 using the activated camera module 1110. For example, the (1-2)^{th} image 1140-1 may be divided into a (1-1)^{th} area 1141 corresponding to the front surface 211 of the first housing 210 and a (1-2)^{th} area 1142 corresponding to the remaining area other than the (1-1)^{th} area 1141 within the entire area. According to an embodiment, the processor 120 may identify a ratio value between the (1-1)^{th} area 1141 and the (1-2)^{th} area 1142, and may identify a first angle 1111 corresponding to the ratio value. The processor 120 may identify the first angle 1111 formed between the first housing 210 and the second housing 220 of the electronic device 101 based on the area ratio of the (1-2)^{th} image 1140-1.

Referring to FIG. 11B, the processor 120 of the electronic device 101 may activate the camera module 1110 in response to the release of the folded state, and may capture a (2-1)^{th} image 1130-2 using the activated camera module 1110. For example, the (2-1)^{th} image 1130-2 may be divided into a (2-1)^{th} distance 1133 corresponding to the front surface 211 of the first housing 210 and a (2-2)^{th} distance 1134 corresponding to the remaining distance other than the (2-1)^{th} distance 1133, within the total distance corresponding to one surface. According to an embodiment, the processor 120 may identify a ratio value between the (2-1)^{th} distance 1133 and the (2-2)^{th} distance 1134 based on the (2-1)^{th} image 1130-2, and may identify a second angle 1112 corresponding to the ratio value. The processor 120 may identify the second angle 1112 formed between the first housing 210 and the second housing 220 of the electronic device 101 based on the distance ratio of the (2-1)^{th} image 1130-2.

Referring to FIG. 11B, the processor 120 of the electronic device 101 may activate the camera module 1110 in response to the release of the folded state, and may capture a (2-2)^{th} image 1140-2 using the activated camera module 1110. For example, the (2-2)^{th} image 1140-2 may be divided into a (2-1)^{th} area 1143 corresponding to the front surface 211 of the first housing 210 and a (2-2)^{th} area 1144 corresponding to the remaining area other than the (2-1)^{th} area 1143 within the entire area. According to an embodiment, the processor 120 may identify a ratio value between the (2-1)^{th} area 1143 and the (2-2)^{th} area 1144, and may identify a second angle 1112 corresponding to the ratio value. The processor 120 may identify the second angle 1112 formed between the first housing 210 and the second housing 220 of the electronic device 101 based on the area ratio of the (2-2)^{th} image 1140-2.

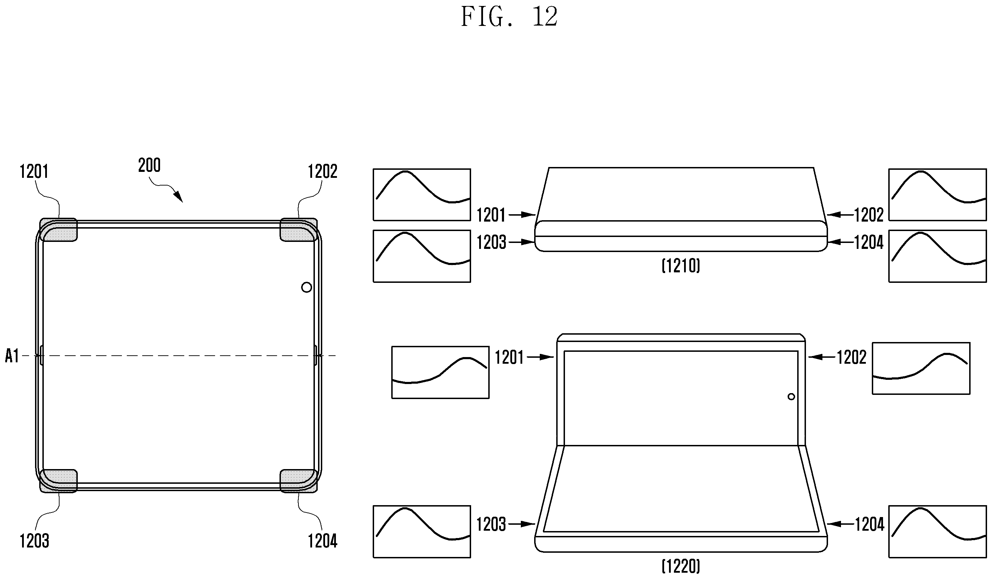

FIG. 12 is a view illustrating an example of changing an audio-related configuration according to an angle formed between a first housing and a second housing according to an embodiment of the disclosure.

The electronic device 200 of FIG. 12 (e.g., the electronic device 101 of FIGS. 1 and 5) may be at least partially similar to the electronic device 200 of FIGS. 2A and 2B, or may further include other embodiments of the electronic device. The electronic device 101 may include a foldable electronic device including a plurality of housings (e.g., the first housing 210 and the second housing 220 in FIG. 2A).

The electronic device 200 of FIG. 12 may include a first housing 210 and a second housing 220 that are coupled to be rotatable about a folding axis A1 via a hinge device (e.g., the hinge device 300 of FIG. 3). The electronic device 200 may include a plurality of audio output modules (e.g., the audio output module 512 of FIG. 5 (a speaker)) based on the first housing 210 and the second housing 220. For example, a first speaker 1201 and a second speaker 1202 may be at least partially disposed in the second housing 220, and a third speaker 1203 and a fourth speaker 1204 may be at least partially disposed in the first housing 210.

Referring to FIG. 12, when operating in a folded state (1210), the electronic device 200 may be configured by applying a first configuration value regarding the plurality of audio output modules 512. When operating in an intermediate state

(1220), the electronic device 200 may be configured by applying a second configuration value regarding the plurality of audio output modules 512. According to an embodiment, the electronic device 200 may reflect different configuration values for the audio output module 512 depending on the operating state of the electronic device 200. The electronic device 200 may change the volume and sound quality of an audio signal based on the folded state (1210), and may enhance the sound field effect according to the output of the audio signal. According to an embodiment, when the electronic device 200 is used as an audio device, the usability of the electronic device 200 may be improved.

Referring to FIG. 12, the electronic device 200 may identify an angle formed between the first housing 210 and the second housing 220 using an audio signal, and may adjust configuration values related to the plurality of audio output modules 512 based on the identified angle. The electronic device 200 may adjust the output effect of an audio signal according to the angle between the first housing 210 and the second housing 220, and may enhance the sound field effect according to the output of the audio signal.

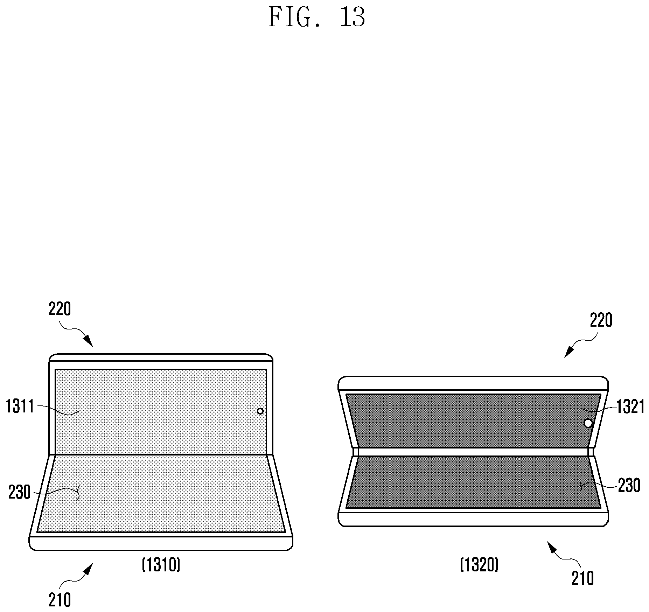

FIG. 13 is a view illustrating an example of changing a display-related configuration according to an angle formed between a first housing and a second housing according to an embodiment of the disclosure.

The electronic device of FIG. 13 (e.g., the electronic device 101 of FIGS. 1 and 5) may be at least partially similar to the electronic device 200 of FIGS. 2A and 2B, or may include other embodiments of the electronic device. The electronic device 101 may include a foldable electronic device including a plurality of housings (e.g., the first housing 210 and the second housing 220 in FIG. 2A). For example, the electronic device 101 may identify an angle formed between the first housing 210 and the second housing 220, and may adjust a configuration value for a display (e.g., the display module 160 of FIG. 5 or the first display 230 of FIG. 2A) based on the identified angle.

Referring to FIG. 13, when the electronic device 101 operates within a first angle range (1310), the display module 160 may be configured by reflecting a first configuration value 1311. When the electronic device 200 operates within a second angle range (1320), the display module 160 may be configured by reflecting a second configuration value 1321. For example, the second configuration value 1321 may cause the display module 160 to have relatively higher brightness than the first configuration value 1311. According to an embodiment, when the electronic device 101 operates within a configured angle range, the configuration value related to the display module 160 may be adjusted to a predetermined configuration value.

According to an embodiment, the electronic device 101 may adjust a configuration value of the display module 160 so as to enable facial recognition of a user based on a camera (e.g., the camera module 180 of FIG. 5) even in a dark surrounding environment.

According to an embodiment, the electronic device 101 may adjust a screen configuration value of the display module 160 based on the angle formed between the first housing 210 and the second housing 220. When the angle falls within a first angle range (1310) in the electronic device 101, the screen may be configured based on a first configuration value 1311, and when the angle falls within a second angle range (1320), the screen may be configured based on a second configuration value 1321. According to an embodiment, since the display module 160 may be used differently depending on the angle formed between the first housing 210 and the second housing 220, the usability of the electronic device 101 may be improved.

An embodiment discloses a method of operating a foldable electronic device 101 including a first housing structure (e.g., the first housing 210 of FIG. 2A) having at least one audio output module (e.g., the audio output module 512 of FIG. 5) disposed therein, a second housing structure (e.g., the second housing 220 of FIG. 2A) configured to be disposed to face the first housing structure 210 in a folded state and having at least one audio input module (e.g., the audio input module 511 of FIG. 5) disposed therein, and a hinge module (e.g., the hinge module 320 of FIG. 3) disposed between the first housing structure 210 and the second housing structure 220. The method according to an embodiment may include an operation of outputting an audio signal based on the at least one audio output module 512 in response to a release of the folded state between the first housing structure 210 and the second housing structure 220, an operation of acquiring the output audio signal based on the at least one audio input module 511, an operation of identifying a time difference value between the output and acquisition of the audio signal, and an operation of identifying an angle formed between the first housing structure 210 and the second housing structure 220 based on the identified time difference value.

The operation of identifying the angle according to an embodiment may include an operation of identifying a first time difference value based on a first time point at which the audio signal is output via the at least one audio output module 512 and a (2-1)^{th} time point at which the output audio signal is acquired via a first audio input module 511, an operation of identifying a second time difference value based on the first time point and a (2-2)^{th} time point at which the output audio signal is acquired via a second audio input module 511, and an operation of identifying the angle formed between the first housing structure 210 and the second housing structure 220 based on the first and second time difference values.

According to an embodiment, the first housing structure 210 may include a first surface 211 oriented in a first direction and a second surface 212 oriented in a second direction opposite to the first direction, and the second housing structure 220 may include a third surface 221 oriented in a third direction and a fourth surface 222 oriented in a fourth direction opposite to the third direction. According to an embodiment, the method may be performed in one of a folded state in which the first surface 211 is disposed to face the third surface 221, an unfolded state in which the first surface 211 and the third surface 221 are disposed such that the first direction and the third direction are substantially the same, and an intermediate state other than the folded state and the unfolded state.

According to an embodiment, the method may further include an operation of identifying a change in a magnetic field associated with a digitizer panel included in a flexible display 160, which is disposed based on the first surface 211 and the third surface 221 and configured such that the first surface 211 faces the third surface 221 in the folded state, and an operation of detecting the release of the folded state based on the identified change in the magnetic field, based on the flexible display 160.

According to an embodiment, the operation of identifying the angle may include an operation of capturing at least one image using a camera 180 disposed in at least one of the first housing structure 210 and the second housing structure 220 in response to the release of the folded state, an operation of identifying, based on the at least one captured image, a first region corresponding to the flexible display 160 and a second region corresponding to the remaining region other than the first region among the entire area of the at least one image, an operation of identifying a ratio value based on the first region and the second region, and an operation of identifying the angle formed between the first housing structure 210 and the second housing structure 220 based on the identified ratio value.

According to an embodiment, the operation of identifying the first region and the second region may include an operation of identifying a boundary line of the flexible display 160 included in the at least one image, and an operation of identifying the first region and the second region corresponding to the remaining region other than the first region, based on the identified boundary line.

According to an embodiment, the method may further include an operation of identifying a first length corresponding to the first region and a second length corresponding to the second region within the total length corresponding to one surface of the at least one image, an operation of identifying a length ratio value based on the first length and the second length, and an operation of identifying the angle formed between the first housing structure 210 and the second housing structure 220 based on the identified length ratio value.

According to an embodiment, the method may further include an operation of identifying a first area corresponding to the first region and a second area corresponding to the second region within the total area corresponding to the at least one image, an operation of identifying an area ratio value based on the first area and the second area, and an operation of identifying the angle formed between the first housing structure 210 and the second housing structure 220 based on the identified area ratio value.

According to an embodiment, the method may further include an operation of adjusting an audio configuration value related to the audio input module 511 and the audio output module 512, or an operation of adjusting a display configuration value related to the flexible display 160 based on the identified angle.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. It is intended that features described with respect to separate embodiments, or features recited in separate claims, may be combined unless such a combination is explicitly specified as being excluded or such features are incompatible. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A foldable electronic device comprising:
a first housing structure (210) having at least one audio output module (512) disposed therein;
a second housing structure (220) configured to be disposed to face the first housing structure (210) in a folded state, the second housing structure having at least one audio input module (511) disposed therein;
a hinge module (320) disposed between the first housing structure (210) and the second housing structure (220);
memory (130); and
a processor (120) operatively connected to the at least one audio input module (511), the at least one audio output module (512), and the memory (130),
wherein the processor (120) is configured to:
in response to a release of the folded state between the first housing structure (210) and the second housing structure (220), output an audio signal based on the at least one audio output module (512),
acquire the output audio signal based on the at least one audio input module (511),
identify a time difference value between the output and the acquisition of the audio signal, and
identify an angle formed between the first housing structure (210) and the second housing structure (220) based on the identified time difference value.

2. The foldable electronic device of claim 1, wherein the memory (130) is configured to store angle-related information (520) associated with the angle, and
wherein the processor (120) is further configured to:
compare the angle-related information (520) with the identified time difference value, and
identify the angle formed between the first housing structure (210) and the second housing structure (220) corresponding to the time difference value.

3. The foldable electronic device of one of claims 1 and 2, wherein the processor (120) is further configured to:
identify a first time difference value based on a first time point at which the audio signal is output through the at least one audio output module (512) and a (2-1)^{th} time point at which the output audio signal is acquired through a first audio input module (511),
identify a second time difference value based on the first time point and a (2-2)^{th} time point at which the output audio signal is acquired through a second audio input module (511), and
identify the angle formed between the first housing structure (210) and the second housing structure (220) based on the first time difference value and the second time difference value.

4. The foldable electronic device of one of claims 1 to 3, wherein the first housing structure (210) comprises a first surface (211) oriented in a first direction and a second surface (212) oriented in a second direction opposite to the first direction,
wherein the second housing structure comprises a third surface (221) oriented in a third direction and a fourth surface (222) oriented in a fourth direction opposite to the third direction, and
wherein the foldable electronic device operates in one of a folded state in which the first surface (211) is disposed to face the third surface (221), an unfolded state in which the first surface (211) and the third surface (221) are disposed such that the first direction and the third direction are substantially the same, and an intermediate state other than the folded state and the unfolded state.

5. The foldable electronic device of claim 1, further comprising:
a flexible display (160) disposed based on the first surface (211) of the first housing structure (210) and the third surface (221) of the second housing structure (220), the flexible display (160) being disposed such that the first surface (211) faces the third surface (221) in the folded state,
wherein the processor (120) is further configured to:
identify a change in a magnetic field associated with a digitizer panel included in the flexible display (160), and
detect a release of the folded state based on the identified change in the magnetic field.

6. The foldable electronic device of one of claims 1 to 5, further comprising:
a camera (180) disposed in at least one of the first housing structure (210) and the second housing structure (220),
wherein the processor (120) is further configured to:
in response to a release of the folded state, capture at least one image using the camera (180),
based on the at least one captured image, identify a first region corresponding to the flexible display (160) and a second region corresponding to a remaining region other than the first region, within an entire region of the at least one captured image,
identify a ratio value based on the first region and the second region, and
identify an angle formed between the first housing structure (210) and the second housing structure (220) based on the identified ratio value.

7. The foldable electronic device of one of claims 1 to 6, wherein the processor (120) is further configured to:
identify a boundary line of the flexible display (160) included in the at least one image, and
based on the identified boundary line, identify the first region corresponding to the flexible display (160) and the second region corresponding to a remaining region other than the first region.

8. The foldable electronic device of one of claims 1 to 7, wherein the processor (120) is further configured to:
identify a first length corresponding to the first region and a second length corresponding to the second region within a total length corresponding to one surface of the at least one image,
identify a length ratio value based on the first length and the second length, and
based on the identified length ratio value, identify the angle formed between the first housing structure (210) and the second housing structure (220).

9. The foldable electronic device of one of claims 1 to 8, wherein the processor (120) is further configured to:
identify a first area corresponding to the first region and a second area corresponding to the second region within a total area corresponding to the at least one image,
identify an area ratio value based on the first area and the second area, and
identify the angle formed between the first housing structure (210) and the second housing structure (220) based on the identified area ratio value.

10. The foldable electronic device of one of claims 1 to 9, wherein the processor (120) is further configured to:
based on the identified angle, adjust an audio configuration value associated with the audio input module (511) and the audio output module (512), or a display configuration value associated with the flexible display (160).

11. The foldable electronic device of one of claims 1 to 10, wherein the processor (120) is further configured to:
when the identified time difference value exceeds a predetermined threshold value, capture at least one image using the camera (180), and
based on the at least one captured image, identify an angle formed between the first housing structure (210) and the second housing structure (220).

12. A method of operating a foldable electronic device (101) comprising a first housing structure (210) having at least one audio output module (512) disposed therein, a second housing structure (220) configured to be disposed to face the first housing structure (210) in a folded state and having at least one audio input module (511) disposed therein, and a hinge module (320) disposed between the first housing structure (210) and the second housing structure (220), the method comprising:
outputting an audio signal based on the at least one audio output module (512) in response to a release of the folded state between the first housing structure (210) and the second housing structure (220);
acquiring the output audio signal based on the at least one audio input module (511);
identifying a time difference value between the output and the acquisition of the audio signal; and
identifying an angle formed between the first housing structure (210) and the second housing structure (220) based on the identified time difference value.

13. The method of claim 12, wherein the identifying of the angle comprises:
identifying a first time difference value based on a first time point at which the audio signal is output through the at least one audio output module (512) and a (2-1)^{th} time point at which the output audio signal is acquired through a first audio input module (511);
identifying a second time difference value based on the first time point and a (2-2)^{th} time point at which the output audio signal is acquired through a second audio input module (511); and
identifying the angle formed between the first housing structure (210) and the second housing structure (220) based on the first time difference value and the second time difference value.

14. The method of claim 12, wherein the identifying of the angle comprises:
in response to a release of the folded state, capturing at least one image using a camera (180) disposed in at least one of the first housing structure (210) and the second housing structure (220);
based on the at least one captured image, identifying a first region corresponding to the flexible display (160) and a second region corresponding to a remaining region other than the first region within an entire region of the at least one image;
identifying a ratio value based on the first region and the second region; and identifying the angle formed between the first housing structure (210) and the second housing structure (220) based on the identified ratio value.

15. The method of claim 14, further comprising:
identifying a first area corresponding to the first region and a second area corresponding to the second region within the entire area of the at least one image; identifying an area ratio value based on the first area and the second area; and
identifying the angle formed between the first housing structure (210) and the second housing structure (220) based on the identified area ratio value.
